# EUROPÄISCHE PATENTSCHRIFT

(11) **EP 3 086 012 B1**
(45) Veröffentlichungstag und Bekanntmachung des Hinweises auf die Patenterteilung: **14.02.2018**
(21) Anmeldenummer: 16160764.3
(22) Anmeldetag: 16.03.2016
(51) Int. Cl.: F16L 25/00, F23J 13/04, F16L 37/113

(54) **ABGASROHR, SYSTEM SOWIE VERFAHREN ZUM HERSTELLEN EINES ABGASROHRABSCHNITTES**
EXHAUST PIPE, SYSTEM AND METHOD FOR PRODUCING AN EXHAUST GAS PIPE SECTION
TUYAU D'ECHAPPEMENT, SYSTEME ET PROCEDE DE FABRICATION D'UNE SECTION DE TUYAU D'ECHAPPEMENT

(30) Priorität: 22.04.2015 DE 102015106167; 18.05.2015 DE 102015107746
(43) Veröffentlichungstag der Anmeldung: 26.10.2016
(73) Patentinhaber: Bächle, Stefano, 8597 Landschlacht (CH)
(72) Erfinder: Bächle, Stefano, 8597 Landschlacht (CH)
(74) Vertreter: Patentanwälte Behrmann Wagner PartG mbB

(56) Entgegenhaltungen:
- EP-A1- 1 227 202
- EP-A1- 2 000 723
- EP-A2- 0 573 863
- EP-A2- 1 808 632
- EP-A2- 2 762 761
- EP-B1- 1 024 321
- WO-A1-2007/096847
- DE-B3-102014 108 563
- DE-C2- 19 531 245
- FR-A1- 2 969 250
- US-A- 3 926 222
- US-A- 5 813 701

## Beschreibung

Die Erfindung betrifft ein einstückiges Abgasrohr aus Kunststoff gemäß dem Oberbegriff des Anspruchs 1, zur Abgasführung von Heizungsanlagen, mit einer Mehrzahl von entlang einer Abgasrohrlängserstreckung angeordneten, biegbaren Wellrohrabschnitten und starren, zylindrischen Glattrohr-Einführabschnitten, wobei mindestens zwei der Wellrohrabschnitte zwischen sich mindestens einen der Glattrohr-Einführabschnitte und/oder mindestens zwei der Glattrohr-Einführabschnitte mindestens einen der Wellrohrabschnitte zwischen sich aufnehmen. Darüber hinaus führt die Erfindung auch auf einen durch Ablängen eines erfindungsgemäßen Abgasrohres hergestellten Abgasrohrabschnitt (Trennabschnitt) gemäß Anspruch 16. Auch führt die Erfindung auf ein System gemäß Anspruch 17 sowie auf ein Verfahren gemäß Anspruch 18 zum Herstellen eines Abgasrohrabschnittes aus einem nach dem Konzept der Erfindung ausgebildeten einstückigen Kunststoff-Abgasrohr.

Aus der EP 1 024 321 B1 ist ein Abgasrohr aus Kunststoff mit abwechselnd angeordneten starren Glattrohr- und biegbaren Wellrohrabschnitten bekannt. Das bekannte Abgasrohr bildet einen Rohrstrang, aus dem Abgasrohrabschnitte (Trennabschnitte), umfassend jeweils zwei endseitige starre Glattrohrabschnitte und mindestens einen biegbaren Wellrohrabschnitt beispielsweise durch Sägen oder Schneiden heraustrennbar sind, insbesondere um winklig zueinander angeordnete oder parallel versetzte starre Rohrstücke (flexibel) über den Abgasrohrabschnitt miteinander zu verbinden, indem die jeweils einen Einführabschnitt bildenden Glattrohrabschnitte des Abgasrohres oder des daraus abgetrennten Abgasrohrabschnittes in entsprechende Muffen der versetzt zueinander angeordneten starren Abgasrohre eingeschoben werden.

Die Abdichtung des Abgasrohres erfolgt über in Ringnuten der benachbart zu dem Abgasrohr bzw. Abgasrohrabschnitt angeordneten Muffenrohre aufgenommenen Dichtungen. Zur axialen Sicherung des Abgasrohrs oder des Abgasrohrabschnittes mit seinen Glattrohr- und Wellrohrabschnitten ist es bekannt, in die die Dichtung aufnehmende Ringnut einen Federring aufzunehmen, der sich radial innen an einen Glattrohrabschnitt des Abgasrohres bzw. des Abgasrohrabschnittes abstützt und dieses klemmend fixiert.

In der EP 2 762 761 A2 ist ein gegenüber dem zuvor beschriebenen Abgasrohr verbessertes Abgasrohr beschrieben, bei welchem die Fixierung des Abgasrohres an einem benachbart zu dem Abgasrohr anzuordnenden Muffenrohr nicht mehr über einen Federring realisiert werden muss, sondern zu diesem Zweck an dem Abgasrohr, genauer gesagt an den Glattrohrabschnitten Bajonettverschlussmittel angeformt sind, über die eine in axiale Richtung wirksame Formschlussverbindung zu dem benachbarten Muffenrohr über ein hülsen- bzw. ringförmiges Sicherungselement herstellbar ist.

Nachteilig bei den beschriebenen Abgasrohren ist, dass zum miteinander Verbinden von zwei solcher Abgasrohre oder von zwei abgetrennten Abgasrohrabschnitten (Trennabschnitten) oder von einem abgetrennten Abgasrohrabschnitt (Trennabschnitt) und einem Abgasrohr kurze, starre Adapterrohre eingesetzt werden müssen, die im Wesentlichen aus zwei Rohrmuffen bestehen, deren Muffeneinführöffnungen in voneinander abgewandte Axialrichtungen weisen, um somit zwei, d.h. jeweils einen Glattrohr-Einführabschnitt dichtend aufnehmen zu können. Auch ist nachteilig, dass zum Anbinden eines nach dem Konzept der Erfindung ausgebildeten Abgasrohres oder eines daraus hergestellten Abgasrohrabschnittes mit seinen zwei endseitigen Glatt-Einführabschnitten das anzubindende Gegenstück immer eine endseitige Muffe aufweisen muss, d.h. immer ein Spezialrohr zur Anwendung kommen muss.

Auch die DE 195 31 245 C2 beschreibt ein Abgasrohr mit abwechselnd angeordneten Glattrohr- und biegbaren Wellrohrabschnitten, wobei sich das bekannte Abgasrohr durch eine einzige, endseitige Rohrmuffe auszeichnet. Wird das Abgasrohr abgelängt, resultiert ein einziger abgetrennter Abgasrohrabschnitt (Trennabschnitt) mit einem endseitigen Muffenrohr - der verbleibende Abgasrohrabschnitt (Trennabschnitt) umfasst weiterhin lediglich Well- und Glattrohr-Einführabschnitte, die gemäß der Lehre der Druckschrift keine weitere Verwendung finden. Für die beschriebene Anwendung wird lediglich der die endseitige Muffe aufweisende Rohrabschnitt benötigt, um eine Gebäudeheizung anzuschließen.

Aus der US 3 926 222 A ist ein Drainagerohr für Erdbodenanwendungen bekannt, welches nicht zum gasdichten Leiten von Abgasen von Heizungsanlagen geeignet ist. Das bekannte flexible Rohr weist diverse Glattrohrabschnitte auf, an denen das Rohr abtrennbar ist, um den Zylinderabschnitt mit am Außenumfang vorgesehener Rasteinrichtung in einen endseitigen Wellrohrabschnitt eines benachbarten Rohres einschieben zu können.

Die US 6,126,209 A beschreibt ebenfalls ein Drainagerohr zur Anwendung im Erdboden, wobei das Rohr abtrennbar ausgebildet ist, und zwar unter Bildung eines endseitigen Aufnahmeabschnittes zur Aufnahme eines gewellten Endabschnittes eines weiteren Drainagerohrs, und zwar unter Zwischenanordnung einer O-Ringdichtung, die in einem Wellental des gewellten Endabschnittes aufgenommen ist.
Aus der US 4,969,670 A ist ein flexibles Wellrohr bekannt, das an verschiedenen Stellen abtrennbar ist und dann einen Aufnahmeabschnitt mit integralen Rastelementen zur Aufnahme eines gewellten Endabschnittes eines weiteren Wellrohres aufweist, wobei zwischen den Rohren eine O-Ringdichtung klemmbar ist. Das bekannte Rohr ist nicht zur gasdichten Leitung von Abgasen von Heizungsanlagen geeignet.

Die DE 699 17 319 T2 beschreibt ein Kunststoffrohr, welches an verschiedenen Stellen auftrennbar ist und einen endseitigen Aufnahmeabschnitt zur Aufnahme eines gewellten Endabschnittes eines Rohres unter Dazwischenanordnung einer Ringdichtung aufweist. Auch mit diesem bekannten Rohr ist keine zur Abgasleitung ausreichend dichte Verbindung zwischen zwei Rohren herstellbar.

Die EP 2 000 723 A1 beschreibt ein Fluidleitungssystem, umfassend miteinander verbundene Einzelrohre, die jeweils endseitig einen einzigen Muffenrohrabschnitt aufweisen und ansonsten Glattrohrabschnitte sowie flexible Wellrohrabschnitte.

Die EP 1 227 202 A1 beschreibt eine Abgasanlage mit Mehrfachbelegung. Im Rahmen dieser Abgasanlage kommen Abgasrohre zum Einsatz, die einen endseitigen Muffenabschnitt aufweisen, sowie einen Glattrohr- und einen Wellrohrabschnitt.

Die US 5,813,701 A beschreibt ein Regenwasser-Verlängerungsrohrsystem mit Rohren, die in einem mittleren Bereich flexibel und endseitig ineinandergesteckt werden können.

Ausgehend von dem vorgenannten Stand der Technik liegt der Erfindung die Aufgabe zugrunde, ein gattungsgemäßes Abgasrohr hinsichtlich eines erweiterten Einsatzbereichs zu optimieren bzw. die Funktionalität des einteiligen Abgasrohres zu verbessern. Bevorzugt sollen zum Verbinden zweier, aus einem erfindungsgemäßen Abgasrohr durch Ablängen hergestellter Abgasrohrabschnitte (Trennabschnitte) keine (separaten) Kopplungs-Doppel-Muffenrohre mehr notwendig sein. Insgesamt ist es gewünscht, dass das Abgasrohr so ausgebildet wird, dass die Anzahl unterschiedlicher Rohre zur Herstellung einer Abgasleitung zwischen einer Heizungsanlage und einem Abgasauslass reduziert werden kann.

Ferner besteht die Aufgabe darin, ein Abgasrohrsystem umfassend ein nach dem Konzept der Erfindung ausgebildetes Abgasrohr anzugeben sowie ein Verfahren zum Herstellen eines Abgasrohrabschnittes aus einem nach dem Konzept der Erfindung ausgebildeten Abgasrohr durch Ablängen des Abgasrohres, wobei sich der hergestellte Abgasrohrabschnitt (Trennabschnitt) bevorzugt dadurch auszeichnet, dass dieser ohne Einsatz einer separaten Muffe mit einem weiteren Abgasrohr oder Abgasrohrabschnitt verbindbar ist.

Diese Aufgabe wird hinsichtlich des Abgasrohres mit den Merkmalen des Anspruchs 1 gelöst, d.h. bei einem gattungsgemäßen Abgasrohr dadurch, dass das Abgasrohr eine Mehrzahl von über die Abgasrohrlängserstreckung verteilt angeordnete Muffenrohrabschnitte aufweist, die jeweils eine innere Ringnut zur Aufnahme einer Ringdichtung aufweisen und die beidseitig an einen Abgasrohrabschnitt des Abgasrohres angrenzen und dass durch Abtrennen eines dieser Abgasrohrabschnitte senkrecht zur Abgasrohrlängserstreckung eine Muffenrohreinführöffnung erzeugbar bzw. freilegbar ist, deren Innendurchmesser einem Außendurchmesser der Glattrohr-Einführabschnitte zuzüglich eines Spiels entspricht, so dass in die Muffenrohreinführöffnung axial ein (anderes) Abgasrohr oder ein von dem Abgasrohr abgetrennter Trennabschnitt (Abgasrohrabschnitt) (jeweils) mit einem endseitigen Glattrohr-Einführabschnitt bis über die Ringnut des zugehörigen Muffenrohrabschnittes hinaus einsteckbar ist.
Ferner wird die Aufgabe gelöst durch einen durch Ablängen eines erfindungsgemäßen Abgasrohres hergestellten Trennabschnitt (Abgasrohrabschnitt) gemäß Anspruch 16, der sich dadurch auszeichnet, dass ein endseitiger Muffenrohrabschnitt durch Ablängen von dem Abgasrohr zu einem endseitigen Muffenrohrabschnitt wurde, was sich dadurch auszeichnet, dass der endseitige Muffenrohrabschnitt eine Trennkante, insbesondere eine Schneidkante aufweist.

Hinsichtlich des Systems wird die Aufgabe mit den Merkmalen des Anspruchs 17 gelöst.

Hinsichtlich des Verfahrens wird die Aufgabe mit den Merkmalen des Anspruchs 18 gelöst, d.h. bei einem gattungsgemäßen Verfahren dadurch, dass das (erfindungsgemäße), bevorzugt aus Polypropylen oder einem anderen, insbesondere säure- und/oder temperaturbeständigen Kunststoff hergestellte, Abgasrohr benachbart zu einem der beidseitig zwischen zwei Abgasrohrabschnitten angeordneten Muffenrohrabschnitte senkrecht zur Abgasrohrlängserstreckung durchtrennt wird und dadurch dieser Muffenrohrabschnitt zu einem endseitigen Muffenrohrabschnitt wird, in dessen durch das Trennen entstandene Muffenrohreinführöffnung ein Rohr, insbesondere ein Glattrohr-Einführabschnitt eines anderen Abgasrohres oder eines davon abgetrennten, also mindestens eine Trennkante aufweisenden Abgasrohrabschnittes (Trennabschnittes) einführbar ist.

Der Erfindung liegt der Gedanke zugrunde, ein Abgasrohr zu schaffen, welches neben einer Mehrzahl von biegbaren Wellrohrabschnitten, die die Flexibilität bzw. Verformbarkeit des Abgasrohres sicherstellen und einer Mehrzahl von Glattrohr-Einführabschnitten, die, sobald sie, insbesondere durch Ablängen des Abgasrohres einen Endabschnitt des entstehenden Abgasrohrabschnittes (also des mindestens eine Trennkante aufweisenden Trennabschnittes) bilden in eine Rohrmuffe einführbar sind, eine Mehrzahl, insbesondere mehr als zwei Muffenrohrabschnitte aufweist, wobei die Muffenrohrabschnitte sich dadurch auszeichnen, dass diese zunächst nicht oder zumindest nicht nur endseitig an dem Abgasrohr angeordnet sind, sondern dass zu beiden Axialseiten der Muffenabschnitte ein einstückig mit dem Muffenrohrabschnitt ausgebildeter Rohrabschnitt angrenzt, welcher zunächst abgetrennt werden muss, um den betreffenden Muffenrohrabschnitt zu einem (durch das Abtrennen eine Trennkante aufweisenden) endseitigen Muffenrohrabschnitt des resultierenden Abgasrohrabschnittes (Trennabschnittes) zu machen, wobei durch das Ablängen des Abgasrohres an dem dann endseitigen Muffenrohrabschnitt eine Muffenrohreinführöffnung resultiert, deren Innendurchmesser so dimensioniert ist, dass in diese ein Rohr, welches endseitig so dimensioniert ist wie ein Glattrohr-Einführabschnitt eines erfindungsgemäßen Abgasrohres, axial einführbar bzw. einsteckbar ist. Dabei weisen die einen dem Außendurchmesser der Glattrohr-Einführabschnitte zzgl. eines Spiels entsprechenden Innendurchmesser aufweisenden Muffenrohrabschnitte des nach dem Konzept der Erfindung ausgebildeten Abgasrohres innere Ringnuten auf, wobei es besonders bevorzugt ist, wenn die Abgasrohre bzw. Muffenrohrabschnitte im Bereich ihrer jeweiligen inneren Ringnut nach radial außen verdickt ausgebildet sind, also einen Ringwulst aufweisen, der, wie später noch erläutert werden wird, zu Befestigungszwecken zum Festlegen, insbesondere Anklipsen eines Sicherungselementes dienen kann. Bevorzugt weisen die Ringnuten eine jeweilige Axialerstreckung von mindestens 1cm, bevorzugt mindestens 1,5cm auf, weiter bevorzugt zur Aufnahme einer Lippendichtung mit entsprechender Axialerstreckung. In die innere Ringnut des erst durch Ablängen des einstückigen Abgasrohres erzeugten endseitigen Muffenrohrabschnittes kann dann eine elastomere Ringdichtung, bevorzugt eine Lippendichtung eingelegt werden, die dichtend mit dem Außenumfang eines in die Einführöffnung eingesteckten bzw. eingefügten Rohres zusammenwirkt. Bevorzugt handelt es sich bei dem einzuführenden bzw. eingeführten Rohr um ein anderes baugleiches Abgasrohr oder einen daraus erzeugten Abgasrohrabschnitt (Trennabschnitt) oder einen Abgasrohrabschnitt (Trennabschnitt) desselben Abgasrohres, wobei sich das jeweils eingesteckte Abgasrohr oder der Abgasrohrabschnitt durch einen Glattrohr-Einführabschnitt auszeichnet, dessen Außendurchmesser dem Innendurchmesser des Muffenrohrabschnittes und/oder der Muffenrohreinführöffnung abzüglich eines Spiels entspricht, um axial eingeführt zu werden und in radialer Richtung dichtend mit der in der Ringnut aufzunehmenden bzw. aufgenommenen Ringdichtung zusammenzuwirken.

Das nach dem Konzept der Erfindung ausgebildete Abgasrohr hat gegenüber den bekannten Abgasrohren eine Vielzahl von Vorteilen. Insbesondere zeichnet es sich durch einen größeren Einsatzbereich bzw. eine höhere Funktionalität aus, da zum Verbinden zweier Abgasrohrabschnitte nun kein starres Doppelmuffenrohr mehr notwendig ist. Vielmehr kann das erfindungsgemäße Abgasrohr so abgelängt werden, dass ein mindestens eine endseitige Trennkante aufweisender einteiliger Abgasrohrabschnitt (Trennabschnitt) entsteht, der endseitig einen Muffenrohrabschnitt aufweist, um mit diesem einen Glattrohr-Einführabschnitt des Abgasrohres oder eines baugleichen Abgasrohres oder eines davon abgetrennten Trennabschnittes aufnehmen zu können. Hierdurch wird die Anzahl der insgesamt für ein Abgasrohrsystem notwendigen unterschiedlichen Rohre reduziert, nicht nur durch den möglichen Verzicht auf die vorgenannten starren Doppelmuffenrohre.

Insgesamt ist es nämlich möglich, auf zusätzlich zu dem Abgasrohr oder einem daraus hergestellten Abgasrohrabschnitt (Trennabschnitt) vorgesehene starre Muffenrohre zu verzichten, wie diese bisher immer noch eingesetzt wurden bzw. eingesetzt werden mussten. Gegenüber der Lehre der DE 195 31 245 C2 hat das nach dem Konzept der Erfindung ausgebildete Abgasrohr den entscheidenden Vorteil, dass aus dem Abgasrohr mehrere Abgasrohrabschnitte erzeugt werden können, insbesondere auch mehr als zwei solcher Abgasrohrabschnitte, die sich durch einen endseitigen Muffenrohrabschnitt auszeichnen und bevorzugt jeweils zusätzlich zu dem endseitigen Muffenrohrabschnitt noch mindestens einen biegbaren Wellrohrabschnitt und/oder einen starren Glattrohr-Einführabschnitt und/oder einen weiteren Muffenrohrabschnitt aufweisen.

Das erfindungsgemäße, insbesondere durch ein Extrusionsblas- und/oder Extrusionsvakuumverfahren hergestellte Abgasrohr zeichnet sich neben einer Vielzahl von über die Längserstreckung des Abgasrohres verteilt angeordneten Muffenrohrabschnitten, insbesondere mehr als zwei, noch weiter bevorzugt mehr als drei Muffenrohrabschnitten dadurch aus, dass das Abgasrohr zusätzlich jeweils eine Mehrzahl von biegbaren Wellrohrabschnitten und eine Mehrzahl von starren Glattrohr-Einführabschnitten aufweist. Diese sind in Richtung der Längserstreckung des Abgasrohres abwechselnd angeordnet, was nicht bedeutet, dass auf jeden der Wellrohrabschnitte immer einer der Glattrohrabschnitte folgen muss. Dies bedeutet vielmehr, dass axial zwischen mindestens zwei der Wellrohrabschnitte mindestens einer der Glattrohrabschnitte und/oder zwischen mindestens zwei der Glattrohrabschnitte mindestens einer der Wellrohrabschnitte angeordnet ist. Bevorzugt weist das Abgasrohr eine Vielzahl von über mindestens einen Glattrohrabschnitt beabstandete Wellrohrabschnitte und/oder eine Vielzahl von über mindestens einen Wellrohrabschnitt beabstandete Glattrohrabschnitte auf. Besonders zweckmäßig ist es, wenn das Abgasrohr mehr als zehn solcher Wellrohrabschnitte und/oder mehr als zehn solcher Glattrohrabschnitte aufweist und/oder mehr als zehn Muffenrohrabschnitte. Besonders bevorzugt beträgt die Länge des Abgasrohres mehr als 10m, noch weiter bevorzugt mehr als 20m, ganz besonders bevorzugt mehr als 30m, besonders bevorzugt zumindest näherungsweise 50m. Bevorzugt ist der minimale Innendurchmesser des Abgasrohres aus einem Wertebereich zwischen 5cm und 20cm gewählt. Bevorzugt beträgt die Axialerstreckung zumindest eines der Glattrohr-Einführabschnitte, vorzugsweise der Mehrzahl der Glattrohr-Einführ-abschnitte, noch weiter bevorzugt sämtlicher Glattrohr-Einführabschnitte mindestens 5cm, ganz besonders bevorzugt mindestens 8cm, besonders bevorzugt zwischen 5cm und 15cm.

Ganz besonders bevorzugt ist es, wenn zumindest einer der Wellrohrabschnitte, vorzugsweise die Mehrzahl der Wellrohrabschnitte, ganz besonders bevorzugt sämtliche Wellrohrabschnitte eine Mindestaxialerstreckung von 5cm, noch weiter bevorzugt von 10cm, ganz besonders bevorzugt von 15cm aufweisen und/oder mindestens fünf Wellenberge und/oder Wellentäler, weiter bevorzugt mindestens zehn Wellenberge und/oder Wellentäler, noch weiter bevorzugt mindestens fünfzehn Wellenberge und Wellentäler umfassen. Bevorzugt sind dabei die Wellenberge und/oder Täler gerundet, d.h. mit einem Radius ausgebildet, wobei auch andere Geometrien, wie z.B. eine Trapezform realisierbar sind, solange die gewünschte Flexibilität der Wellrohrabschnitte resultiert.

Das nach dem Konzept der Erfindung ausgebildete Abgasrohr kann bei Bedarf zusätzlich zu den innerhalb der Rohrlängserstreckung angeordneten Muffenrohrabschnitten alternativ an einem Ende oder an beiden Enden einen Muffenrohrabschnitt aufweisen. Selbstverständlich kann das nach dem Konzept der Erfindung ausgebildete Abgasrohr auch ohne endseitige Muffenrohrabschnitte realisiert werden, insbesondere mit mindestens einem, vorzugsweise zwei endseitigen Glattrohr-Einführabschnitten.

Besonders zweckmäßig ist eine Ausführungsform des erfindungsgemäßen Abgasrohres, wonach an eine erste Axialseite zumindest eines der Muffenrohrabschnitte, bevorzugt der Mehrzahl der Muffenrohrabschnitte, besonders bevorzugt sämtlicher (insbesondere nicht-endseitiger) Muffenrohrabschnitte ein Abgasrohrabschnitt angrenzt, der als (weiterer) Muffenrohrabschnitt oder als Glattrohr-Einführabschnitt oder als Wellrohrabschnitt ausgebildet ist. Bevorzugt grenzt dieser Abgasrohrabschnitt unmittelbar an den Muffenrohrabschnitt an, insbesondere an ein Muffenrohrabschnittsende, das nach dem Abtrennen die Muffenrohreinführöffnung bildet. Bei Bedarf kann zwischen dem vorerwähnten Abgasrohrabschnitt und dem Muffenrohrabschnitt noch ein (zusätzlicher) Übergangsabschnitt, beispielsweise ein konischer Übergangsabschnitt vorgesehen werden, der die Aufgabe hat, einen möglichen Durchmessersprung zwischen dem Muffenrohrabschnitt und dem angrenzenden Abgasrohrabschnitt zu überwinden. Ein solcher konischer Übergangsabschnitt ist insbesondere dann sinnvoll, wenn der an den Muffenrohrabschnitt angrenzende Abgasrohrabschnitt einer der Glattrohr-Einführabschnitte ist, da dessen Außendurchmesser prinzipbedingt kleiner sein muss als der Innendurchmesser der zugehörigen Muffenrohreinführöffnung. Für den Fall des Vorsehens eines Übergangsabschnittes, dessen Axialerstreckung bevorzugt 5cm nicht überschreitet und noch weiter bevorzugt kleiner ist als 3cm, noch weiter bevorzugt kleiner ist als 2cm, ist es bevorzugt, wenn eine Trennung des Abgasrohres zu beiden Axialseiten des Übergangsabschnittes erfolgt, wobei, wie später noch erläutert werden wird, bevorzugt zu beiden Axialseiten eines (insbesondere jeden) Übergangsabschnittes eine Trennmarkierung vorgesehen ist, insbesondere in Form einer ringförmigen Vertiefung am Außenumfang des Abgasrohres.

Besonders zweckmäßig ist es, wenn an einer der ersten, vorerwähnten Axialseite (die bevorzugt wie zuvor beschrieben "bestückt" ist) gegenüberliegenden bzw. über den Muffenrohrabschnitt beabstandeten zweiten Axialseite des vorerwähnten Muffenrohrabschnittes, vorzugsweise der Mehrzahl von Muffenrohrabschnitten, noch weiter bevorzugt sämtlicher (endseitiger) Muffenrohrabschnitte ein Abgasrohrabschnitt angrenzt, der als (weiterer) Muffenrohrabschnitt oder als biegbarer Wellrohrabschnitt oder als Glattrohr-Einführabschnitt ausgebildet ist, wobei dieser Abgasrohrabschnitt entweder unmittelbar an den vorerwähnten Muffenrohrabschnitt angrenzt, insbesondere auf einer von der Muffenrohreinführöffnung abgewandten Seite oder mit der zweiten Axialseite über einen, insbesondere konischen Übergangsabschnitt verbunden ist, um einen etwaigen Durchmessersprung zwischen dem Abgasrohrabschnitt und dem Muffenrohrabschnitt zu überwinden.

Auch hier ist die Axialerstreckung des Übergangsabschnittes bevorzugt gering und insbesondere so zu wählen, wie zuvor im Zusammenhang mit der ersten Axialseite erläutert.

Ganz besonders zweckmäßig ist es, wenn sich das Abgasrohr dadurch auszeichnet, dass es mindestens eine der nachfolgend erläuterten Abgasrohrabschnittsfolgen aufweist, wobei es besonders bevorzugt ist, wenn diese Abgasrohrabschnittsfolge mehrfach entlang der Längserstreckung des Abgasrohres vorhanden ist, ganz besonders bevorzugt mehrfach unmittelbar hintereinander. Dabei ist es ganz besonders bevorzugt, wenn mehrfach entlang der Längserstreckung des Abgasrohres, insbesondere mehr als dreimal, besonders bevorzugt mehr als 10 mal eine Abgasrohrabschnittsfolge in dem einstückigen Abgasrohr vorgesehen ist, die mindestens einen, bevorzugt Bajonettverschlussmittel aufweisenden, Glattrohr-Einführabschnitt, mindestens einen biegbaren Wellrohrabschnitt und mindestens einen Muffenrohrabschnitt aufweist, wobei der mindestens eine Muffenrohrabschnitt der sich mehrfach wiederholenden Abgasrohrabschnittsfolge zwischen zwei Abgasrohrabschnitten angeordnet ist, wobei diese Abgasrohrabschnitte bevorzugt ausgewählt sind aus der Gruppe von Abgasrohrabschnitten: Muffenrohrabschnitt, Glattrohr-Einführab-schnitt, Wellrohrabschnitt.

Die vorerwähnten Bajonettverschlussmittel der Glattrohr-Einführabschnitte dienen zum axialen Sichern des erfindungemäßen Abgasrohres an einer benachbarten Rohrmuffe, bevorzugt eines erfindungsgemäßen Abgasrohres oder eines Trennabschnittes. Hierfür muss dann der Glattrohr-Einführabschnitt einen Endabschnitt des Abgasrohres oder eines daraus hergestellten Trennabschnittes bilden. Dabei wirken mit den Bajonettverschlussmitteln (Gegen-)Bajonettverschlussmittel eines ringförmigen Sicherungselementes im Rahmen einer Steck-DrehVerbindung zusammen, wobei das Sicherungselement anderenends an einem Ringwulst der vorerwähnten Rohrmuffe festgelegt ist bzw. wird, insbesondere durch axialen Aufklipsen mit Hilfe von in radialer Richtung federnden Laschen des Sicherungselementes. Anstelle der vorerwähnten Bajonettverschlussmittel ist es auch möglich, das Abgasrohr oder einen daraus abgetrennten Trennabschnitt über einen Eingriff in ein Wellental eines der Wellrohrabschnitte axial zu sichern, wobei hierzu die zur Anwendung kommenden Sicherungsmittel bevorzugt an einem Ringwulst einer benachbarten endseitigen Rohrmuffe, insbesondere eines anderen nach dem Konzept der Erfindung ausgebildeten Abgasrohres oder eines Trennabschnittes festgelegt wird.

Besonders bevorzugt ist es, wenn sich nur eine einzige, insbesondere der folgenden, Abgasrohrabschnittsfolgen wiederholt. Denkbar ist auch eine Ausführungsform, bei der mehrere unterschiedliche, insbesondere der folgenden, Abgasrohrabschnittsfolgen entlang der Längserstreckung des Abgasrohres angeordnet sind, wobei es bevorzugt ist, wenn diese mehreren unterschiedlichen Abgasrohrabschnittsfolgen jeweils mehrfach vorgesehen sind, beispielsweise unmittelbar hintereinander oder abwechselnd oder in beliebiger Reihenfolge.

Bei der/den bevorzugt als einzige oder eine von mehreren Abgasrohrabschnittsfolge(n) vorgegebenen Abgasrohrabschnittsfolgen des Abgasrohres handelt es sich bevorzugt um die Folgenden:
a. Glattrohr-Einführabschnitt, biegbarer Wellrohrabschnitt, Muffenrohrabschnitt, Muffenrohrabschnitt, biegbarer Wellrohrabschnitt
b. Glattrohr-Einführabschnitt, biegbarer Wellrohrabschnitt, Muffenrohrabschnitt, Muffenrohrabschnitt, biegbarer Wellrohrabschnitt, Glattrohr-Einführabschnitt
c. Muffenrohrabschnitt, biegbarer Wellrohrabschnitt, Glattrohr-Einführabschnitt
d. Glattrohr-Einführabschnitt, biegbarer Wellrohrabschnitt, Muffenrohrabschnitt, biegbarer Wellrohrabschnitt
e. Glattrohr-Einführabschnitt, biegbarer Wellrohrabschnitt, Muffenrohrabschnitt, biegbarer Wellrohrabschnitt, Glattrohr-Einführabschnitt
f. Muffenrohrabschnitt, biegbarer Wellrohrabschnitt, Glattrohr-Einführabschnitt, Glattrohr-Einführabschnitt
g. Muffenrohrabschnitt, biegbarer Wellrohrabschnitt, Glattrohr-Einführabschnitt, Glattrohr-Einführabschnitt, biegbarer Wellrohrabschnitt
h. Muffenrohrabschnitt, biegbarer Wellrohrabschnitt, Glattrohr-Einführabschnitt, biegbarer Wellrohrabschnitt,
i. Muffenrohrabschnitt, biegbarer Wellrohrabschnitt, Glattrohr-Einführabschnitt, biegbarer Wellrohrabschnitt, Glattrohr-Einführabschnitt,
j. biegbarer Wellrohrabschnitt, Muffenrohrabschnitt, Glattrohr-Einführabschnitt
k. biegbarer Wellrohrabschnitt, Muffenrohrabschnitt, Glattrohr-Einführabschnitt, Glattrohr-Einführabschnitt
l. biegbarer Wellrohrabschnitt, Muffenrohrabschnitt, Glattrohr-Einführabschnitt, biegbarer Wellrohrabschnitt, Glattrohr-Einführabschnitt
m. biegbarer Wellrohrabschnitt, Glattrohr-Einführabschnitt, Muffenrohrabschnitt, Muffenrohrabschnitt
n. Glattrohr-Einführabschnitt, biegbarer Wellrohrabschnitt, Muffenrohrabschnitt, Muffenrohrabschnitt

Vorstehende Abgasrohrabschnittsfolgen können dadurch variiert werden bzw. sein, dass zwischen mindestens zwei der aufeinanderfolgenden Abgasrohrabschnitte der jeweiligen Abgasrohrabschnittsfolge ein im Vorfeld erläuterter Übergangsabschnitt zur Durchmesseranpassung angeordnet ist.

Besonders zweckmäßig ist eine Ausführungsform des nach dem Konzept der Erfindung ausgebildeten Abgasrohres, bei der mindestens zwei der Muffenrohrabschnitte, vorzugsweise mehrfach zwei der Muffenrohrabschnitte unmittelbar aneinandergrenzen, derart, dass bei einem Trennen des Abgasrohres senkrecht zur Abgasrohrlängserstreckung in einem Bereich, d.h. an einer Trennposition zwischen diesen Muffenrohrabschnitten zwei endseitige Muffenrohrabschnitte, d.h. zwei Abgasrohrabschnitte (Trennabschnitte) mit jeweils einem endseitigen Muffenrohrabschnitt resultieren, wobei jeder endseitige Muffenrohrabschnitt durch das Trennen eine Muffenrohreinführöffnung erhält, die so dimensioniert ist, wie eingangs beschrieben zur Aufnahme eines Rohres, das endseitig einen Glattrohr-Einführabschnitt aufweist. Zusätzlich oder alternativ ist es bevorzugt, wenn sich das erfindungsgemäße Abgasrohr dadurch auszeichnet, dass zwei entweder unmittelbar benachbarte bzw. aneinander angrenzende der Muffenrohrabschnitte oder alternativ lediglich aufeinanderfolgende und über mindestens einen der Glattrohr-Einführabschnitte und/oder mindestens einen der biegbaren Wellrohrabschnitte voneinander beabstandete der Muffenrohrabschnitte in die gleiche Axialrichtung orientiert oder gegensätzlich orientiert sind, was bedeutet, dass die durch Trennen des Rohres benachbart zu den beiden Muffenrohrabschnitten resultierende Muffenrohreinführöffnungen in die gleiche oder einander entgegengesetzte Richtungen weisen bzw. nur über eine einzige oder alternativ zwei innere Ringnuten voneinander beabstandet sind.

Besonders zweckmäßig ist eine Ausführungsform des nach dem Konzept der Erfindung ausgebildeten Abgasrohres, bei der an der Mehrzahl der Glattrohr-Einführabschnitte, insbesondere an jedem der Glattrohrabschnitte einteilig mit dem Abgasrohr ausgebildete Bajonettverschlussmittel, insbesondere in Form von den in Umfangsrichtung beabstandeten und nach radial außen weisenden sowie sich in Umfangsrichtung erstreckenden Erhebungen angeordnet sind, die jedenfalls derart ausgebildet sind, dass an diesen ein, bevorzugt hülsenförmiges Sicherungselement durch eine Relativverdrehbewegung zum Abgasrohr zum Herstellen eines in axialer Richtung wirksamen Formschlusses festlegbar ist. Bevorzugt umfasst dieses Sicherungselement benachbart zu seinen Gegen-Bajonettverschlussmitteln, d.h. benachbart zu seinen sicherungselementseitigen Bajonettverschlussmitteln federnde Laschen zum axialen Aufschieben über einen Ringwulst einer Rohrmuffe, insbesondere über einen im Inneren eine Ringnut zur Dichtungsaufnahme aufweisenden Ringwulst eines endseitigen Muffenabschnittes eines durch Ablängen aus einem nach dem Konzept der Erfindung ausgebildeten Abgasrohr hergestellten Abgasrohrabschnitt. Durch das Vorsehen der integralen, d.h. einstückig mit dem einstückigen Abgasrohr ausgebildeten Bajonettverschlussmittel, insbesondere an jedem der Glattrohr-Einführabschnitte kann auf die vergleichsweise aufwendig zu fixierenden Federringe aus dem Stand der Technik verzichtet werden.

Bevorzugt zeichnet sich ein nach dem Konzept der Erfindung ausgebildetes Abgasrohr in Weiterbildung zusätzlich aus durch mindestens ein integrales, d.h. angeformtes Positionierungshilfegeometriepaar, welches die Montage des Abgasrohres wesentlich erleichtert. Bevorzugt sind mehrere, insbesondere gleichmäßig in Umfangsrichtung beabstandete Positionierungshilfegeometriepaare an den jeweiligen Bajonettverschlussmitteln vorgesehen. Dieses mindestens eine Positionierungshilfegeometriepaar umfasst eine Anschlaggeometrie zum Begrenzen der Relativbewegung des Sicherungselementes in der Festziehumfangsrichtung durch entsprechende Wechselwirkung mit dem Sicherungselement, insbesondere mit nach radial innen ragenden Wechselwirkungsmitteln des Sicherungselementes, bevorzugt in Form von sicherungselementseitigen Bajonettverschlussmitteln sowie eine, vorzugsweise in der Festlegeumfangsrichtung vor der Anschlagsgeometrie angeordnete Widerstandsgeometrie zum Erhöhen des Kraftaufwandes an einer definierten Umfangsrelativposition von Abgasrohr und Sicherungselement beim Relativverdrehen des Sicherungselementes durch entsprechende, insbesondere reibungskraftbedingte Wechselwirkung mit dem Sicherungselement (genauer von dessen Wechselwirkungsmitteln) während des Herstellens und/oder Lösens des in axialer Richtung wirksamen Formschlusses.

Anders ausgedrückt umfasst das weiterbildungsgemäße Abgasrohr mindestens eine Anschlaggeometrie, an der eine das Sicherungselement zur Begrenzung der Relativverdrehbewegung anschlägt, wodurch eine weitere Relativverdrehbewegung unterbunden wird. Ferner umfasst das Abgasrohr eine Widerstandsgeometrie, die den Widerstand beim Relativverdrehen zwischen Abgasrohr und Sicherungselement erhöht, bevor die Relativbewegung durch Wechselwirkung des Sicherungselementes mit der Anschlaggeometrie gestoppt wird. Die Widerstandsgeometrie gibt dem Benutzer somit eine Rückkopplung, kurz vor Erreichen der Endrelativposition zwischen Sicherungselement und Abgasrohr, in der der Formschluss wirksam wird. Gleichzeitig erschwert die Widerstandgeometrie vorzugsweise ein unbeabsichtigtes Lösen, da beim Überwinden der Widerstandgeometrie ein erhöhter Kraft- bzw. Drehmomentaufwand notwendig ist.

Besonders bevorzugt ist eine Variante, bei der sowohl die Anschlaggeometrie als auch die Widerstandsgeometrie als radiale Erhöhungen ausgebildet sind, da sich derart ausgestaltete Geometrien besonders einfach bei einem bevorzugten Herstellungsverfahren des Abgasrohres durch Extrusions-Blas- und/oder Vakuumformen realisieren lassen. Besonders zweckmäßig ist es dabei, wenn vorgenannte Geometrien von der Rohrinnenseite her betrachtet als sich nach außen erstreckende Vertiefungen ausgebildet sind. Bei der Anordnung des Positionierungshilfegeometriepaares an den Sicherungsmitteln ragen die Anschlaggeometrie und die Widerstandsgeometrie bevorzugt nach radial innen.

Besonders zweckmäßig ist es zur Erreichung des gewünschten Effektes, wenn die betragsmäßige Radialerstreckung der Anschlaggeometrie nach radial innen oder nach radial außen größer ist, insbesondere mindestens doppelt so groß ist, wie die betragsmäßige Radialerstreckung der Widerstandsgeometrie nach radial innen oder nach radial außen, bevorzugt gemessen ausgehend von einem Außendurchmesser eines der Glattrohr-Einführabschnitte. Besonders zweckmäßig hat es sich dabei herausgestellt, wenn die Radialerstreckung der Widerstandsgeometrie kleiner ist als 1mm, bevorzugt zumindest näherungsweise 0,8mm beträgt und die Radialerstreckung der Anschlaggeometrie größer ist als 1mm, vorzugsweise größer ist als 1,5mm, ganz besonders zumindest näherungsweise 1,8mm beträgt.

Es ist besonders bevorzugt, wenn die Widerstandsgeometrie in der Festziehumfangsrichtung vor der Anschlagsgeometrie angeordnet ist, was bedeutet, dass das Sicherungselement beim Festlegen bzw. beim Relativverdrehen in der Festlegeumfangsrichtung zuerst mit der Widerstandsgeometrie in Wechselwirkung tritt und danach erst in der Anschlagsgeometrie, vorzugsweise nach vollständigem Überwinden der Widerstandsgeometrie.

Besonders bevorzugt ist es dabei, wenn die Widerstandsgeometrie und die Anschlaggeometrie in Umfangsrichtung voneinander beabstandet sind. Es ist besonders bevorzugt, wenn dieser Abstand zumindest der Umfangserstreckung von Wechselwirkungsmitteln des Sicherungselementes entspricht, mit denen das Sicherungselement mit den Geometrien in Wechselwirkung tritt. Bevorzugt ist der Abstand der Geometrien eines Positionierungshilfegeometriepaares in Umfangsrichtung größer als die Umfangserstreckung der diesen zugeordneten Wechselwirkungsmittel.

Ganz besonders bevorzugt ist eine Ausführungsform, bei der die Anschlaggeometrie und/oder die Widerstandsgeometrie auf einer von einem Aufsteckende des Abgasrohres zum Aufstecken des Sicherungselementes abgewandten Seite der Bajonettverschlussmittel angeordnet sind. Das Aufsteckende ist dabei ein freies Ende eines endseitigen Glattrohr-Einführabschnittes, also ein von dem benachbarten Wellrohrabschnitt beabstandetes freies Ende. Die Anschlaggeometrie und/oder die Widerstandsgeometrie sind/ist also bevorzugt auf der von dem endseitigen Glattrohr-Einführabschnitt abgewandten Seite der Bajonettverschlussmittel angeordnet, insbesondere um mit den Bajonettverschlussmitteln des Sicherungselementes in Wechselwirkung zu treten, die in diesem Fall die Wechselwirkungsmittel bilden.

Im Hinblick auf die konkrete Ausgestaltung der bevorzugt vorgesehenen Bajonettverschlussmittel des Abgasrohres ist es bevorzugt, wenn diese mindestens zwei in Umfangsrichtung beabstandete, vorzugsweise mehr als zwei, insbesondere gleichmäßig in Umfangsrichtung verteilte, nach radial außen ragende und sich in Umfangsrichtung erstreckende Radialfortsätze aufweist, die sich bevorzugt über einen Umfangswinkel von mindestens 5° in Umfangsrichtung erstrecken und die hintergriffen werden können von entsprechenden (sicherungselementseitigen) Bajonettverschlussmitteln des Sicherungselementes in der Art eines Bajonettverschlusses zur axialen Sicherung. Bevorzugt sind die Bajonettverschlussmittel des zugehörigen Sicherungselementes dabei als nach radial innen ragende Fortsätze ausgebildet, die sich ebenfalls in Umfangsrichtung erstrecken, vorzugsweise um mindestens 5° in Umfangsrichtung.

Als besonders vorteilhaft hat es sich herausgestellt, wenn jedem Glattrohr-Einführabschnitt des Abgasrohres Bajonettverschlussmittel und mindestens ein Positionierungshilfegeometriepaar (umfassend eine Anschlaggeometrie und eine Widerstandsgeometrie) zugeordnet sind, vorzugsweise entweder nur im Bereich eines axialen Endes des jeweiligen Glattrohr-Einführabschnittes oder an beiden axialen Endbereichen des jeweiligen Glattrohr-Einführabschnittes. Bei der letztgenannten Ausführungsform ist es möglich, einen Glattrohr-Einführabschnitt des rohrstrangförmigen Abgasrohres in zwei selbstständige Glattrohr-Einführabschnitte von resultierenden Abgasrohrabschnitten aufteilen zu können, wobei dann beide selbstständigen Glattrohr-Einführabschnitte mit jeweils einem Sicherungselement an einem Rohrstück fixierbar sind.

Besonders bevorzugt ist es, wenn die Wellrohrabschnitte jeweils, insbesondere vollständig bzw. axial durchgehend von Außengewindeabschnitten gebildet sind. Hier sind dann nicht voneinander separate Wellen vorgesehen, sondern diese werden von einem mit einer Steigung versehenen Außengewinde gebildet, welche zwangsläufig nicht in separaten Radialebenen verläuft, sondern sich entlang der Axialerstreckung des Abgasrohres mit der vorgegebenen Steigung entlang windet.

Bevorzugt läuft das Außengewinde in einem hierzu axial benachbarten Glattrohr-Einführabschnitt aus, insbesondere indem die Höhe (Radialerstreckung) der Gewindegangwindung des Außengewindes in Richtung Glattrohr-Einführabschnitt langsam in Umfangsrichtung abnimmt. Anders ausgedrückt steigt die Höhe in Umfangsrichtung der Gewindegangwindung ausgehend von dem Glattrohr-Einführabschnitt in Umfangsrichtung bevorzugt an.

Alternativ und besonders bevorzugt ist eine Ausführungsform, bei der die Wellrohrabschnitte jeweils mehrere ringförmige und in axial benachbarten, parallelen Radialebenen, bezogen auf eine Axialerstreckung des Abgasrohrs angeordnete Wellen aufweisen und dass die Bajonettverschlussmittel axial benachbart zu den Wellen, insbesondere in einem an einem Glattrohr-Einführabschnitt angrenzenden Bereich vorgesehen sind.

In Weiterbildung der Erfindung ist mit Vorteil vorgesehen, zusätzlich zu den fakultativen Bajonettverschlussmitteln, über die das von dem Abgasrohr separate Sicherungselement axial an dem Abgasrohr durch eine Steck-Drehbewegung festlegbar ist, insbesondere an jedem Glattrohr-Einführabschnitt, jeweils eine Löseanschlagsgeometrie vorzusehen, die derart ausgebildet und angeordnet ist, dass mit dieser eine Verdrehbewegung des Sicherungselementes relativ zu dem Abgasrohr entgegen der Festziehumfangsrichtung, d.h. in einer Löseumfangsrichtung begrenzbar ist, um auf diese Weise eine Löseposition für das Sicherungselement zu definieren, gegen die das Sicherungselement (mit entsprechenden Wechselwirkungsmitteln, insbesondere in Form von den sicherungselementseitigen Bajonettverschlussmitteln) in der Löseumfangsrichtung verdrehbar ist, wobei in dieser Löse- bzw. Anschlagsposition gewährleistet ist, dass der axial wirksame Formschluss zwischen den Bajonettverschlussmitteln des Abgasrohres und den sicherungselementseitigen Bajonettverschlussmitteln nicht (mehr) besteht und in der Folge eine axiale Relativbewegung des Abgasrohres zu den Sicherungsmitteln möglich ist und dadurch Sicherungselement und Abgasrohr durch diese, insbesondere ausschließliche, axiale Abziehbewegung voneinander getrennt werden können.

Mit anderen Worten umfasst das Abgasrohr, insbesondere an sämtlichen Bajonettverschlussmitteln der unterschiedlichen Glattrohr-Einführabschnitte, jeweils eine Löseanschlagsgeometrie, die verhindert, dass beim Verdrehen des Sicherungselementes in der Löseumfangsrichtung von den sicherungselementseitigen Bajonettverschlussmitteln Abstände zwischen zwei in Umfangsrichtung benachbarten Radialfortsätzen der Bajonettverschlussmittel überdreht werden, sondern gewährleisten vielmehr das Erspüren einer definierten Löserelativposition zwischen Sicherungselement und Abgasrohr durch den Benutzer, insbesondere in schlecht einsehbaren Einsatzpositionen, wie beispielsweise in Abgasschächten, so dass der Benutzer erspürt bzw. weis, wann Sicherungselement und Abgasrohr so relativ zueinander positioniert bzw. verdreht sind, dass in einer reinen axialen Löse- bzw. Absteckbewegung das Sicherungselement und das Abgasrohr voneinander trennbar sind.

Im Hinblick auf die konkrete Anordnung der mindestens einen Löseanschlagsgeometrie gibt es unterschiedliche Möglichkeiten. Wesentlich ist es, dass beim bzw. nach dem Anschlagen von entsprechenden Wechselwirkungsmitteln des Sicherungselementes an der Löseanschlagsgeometrie also in der Löseposition Sicherungselement und Abgasrohr in einer reinen axialen Bewegung voneinander getrennt werden können. Bevorzugt ist eine Ausführungsform bzw. Anordnung der Löseanschlagsgeometrie, bei der diese in axialer Richtung (Längserstreckung des Abgasrohres) mit einem in der Festziehumfangsrichtung gelegenen und einen der Abstände zwischen zwei Radialfortsätzen begrenzenden Radialfortsatzende von einem der Radialfortsätze fluchtet oder alternativ zu dem vorgenannten Radialfortsatz in der Festziehumfangsrichtung beabstandet ist.

Insbesondere indem die Löseanschlagsgeometrie das Radialfortsatzende in der Umfangsrichtung überragt.

Um nicht nur eine exakte Löseposition zu definieren bzw. für den Benutzer auch ohne Sichtkontakt spürbar zu machen sondern auch eine Fixierposition bzw. Fixierumfangsposition, in der ein Sicherungselement und Abgasrohr über die Bajonettverschlussmittel axial definiert gesichert sind, ist es bevorzugt und in Weiterbildung der Erfindung vorgesehen, dass an das Abgasrohr eine die Fixierposition definierende Fixieranschlagsgeometrie zur Begrenzung der Verdrehbewegung des Sicherungselementes relativ zu dem Abgasrohr in der Festziehumfangsrichtung angeformt ist, die derart ausgebildet und angeordnet ist, dass das Sicherungselement gegen diese in der Festziehumfangsrichtung (mit entsprechenden Wechselwirkungsmitteln, bevorzugt in Form der sicherungselementseitigen Bajonettverschlussmittel) nach erfolgter axialer Steckbewegung, also ausgehend von der Löseposition (Löseumfangsposition) verdrehbar ist. Bevorzugt handelt es sich bei der Fixeranschlagsgeometrie um die Anschlagsgeometrie eines bevorzugt vorgesehenen Positionierungshilfegeometriepaares. Auch hier ist es bevorzugt, wenn sämtlichen Glattrohr-Einführabschnitten, insbesondere sämtlichen Bajonettverschlussmitteln, bevorzugt in Form von jeweils mindestens zwei in Umfangsrichtung beabstandeten Radialfortsätzen mindestens eine solche Fixieranschlagsgeometrie zugeordnet ist, so dass dann eine Relativverdrehung des Sicherungselementes zum Abgasrohr nur zwischen einer definierten Lösungsposition und einer definierten (in Umfangsrichtung beabstandeten) relativen Fixierposition möglich ist.
Im Hinblick auf die konkrete Ausgestaltung der Fixieranschlagsgeometrie und der Löseanschlagsgeometrie gibt es unterschiedliche Möglichkeiten. So ist es denkbar, dass die Fixieranschlagsgeometrie und die Löseanschlagsgeometrie von voneinander separaten, in Umfangsrichtung beabstandeten radialen Erhöhungen gebildet sind. Besonders bevorzugt ist eine Ausführungsform, bei der zumindest eine Löseanschlagsgeometrie, vorzugsweise sämtliche Löseanschlagsgeometrien und eine jeweils zugehörige Fixieranschlagsgeometrie von einer gemeinsamen radialen Erhöhung gebildet sind und zwar bevorzugt von separaten, in Umfangsrichtung beabstandeten radialen Flanken dieser gemeinsamen radialen Erhöhung.

Besonders bevorzugt ist eine Ausführungsform, bei der, vorzugsweise in der Festziehumfangsrichtung vor der Fixieranschlagsgeometrie und noch weiter bevorzugt in der Festziehumfangsrichtung hinter der Widerstandsgeometrie eine, mehrere radiale Hügel (d.h. mehrere sich in radialer Richtung nach außen erstreckende Erhöhungen) umfassende Haptikgeometrie vorgesehen bzw. an das Abgasrohr angeformt ist, die beim Verdrehen des Sicherungselementes relativ zu dem Abgasrohr durch Wechselwirkung des Sicherungselementes mit der Haptikgeometrie über entsprechende Wechselwirkungsmittel in die Fixierposition und/oder in die Löseposition zu einer, vorzugsweise mehrere Schwingungsmaxima aufweisenden, Vibration des Sicherungselementes führt. Bevorzugt entsteht dabei ein ratterndes Geräusch, ähnlich einer Ratschenbetätigung. Hierdurch erspürt der Benutzer die Bewegung und weiß, er fährt so, dass die Relativrotationsbewegung bald bzw. in Kürze an der Fixierposition oder der Löseposition endet. Insgesamt wird hierdurch der Löse- und/oder Festziehvorgang komfortabler und definierter.

Besonders zweckmäßig ist eine Ausführungsform, bei der die mindestens eine Löseanschlagsgeometrie in einem Bereich axial zwischen den Bajonettverschlussmitteln und einem angrenzenden Wellrohrabschnitt auf einer von einem endseitigen der Glattrohrabschnitte abgewandten Seite der Bajonettverschlussmittel angeordnet ist. Besonders bevorzugt ist es, wenn, wie erwähnt, sämtlichen Bajonettverschlussmitteln jeweils mindestens eine Löseanschlagsgeometrie zugeordnet ist und diese Löseanschlagsgeometrien jeweils zwischen den jeweiligen Bajonettverschlussmitteln und einem unmittelbar angrenzenden Wellrohrabschnitt des Abgasrohres, also auf der dem unmittelbar benachbarten Glattrohrabschnitt abgewandten Seite der Bajonettverschlussmittel angeordnet sind.

Als besonders zweckmäßig hat es sich herausgestellt, dass zwischen zwei unmittelbar aneinander angrenzenden Muffenrohrabschnitten eine, insbesondere als Ringvertiefung ausgebildete, Trennmarkierung angeordnet ist und/oder dass eine solche Trennmarkierung zwischen zwei unmittelbar aneinander angrenzenden der Glattrohr-Einführabschnitte und/oder zwischen einem der Muffenrohrabschnitte und einem unmittelbar daran angrenzenden der Glattrohr-Einführabschnitte angeordnet ist und/oder beidseits eines der (fakultativen) Übergangsabschnitte zwischen zwei der Abgasrohrabschnitte des Abgasrohres.

Im Hinblick auf die Dimensionierung und Ausgestaltung der Muffenrohr- und Wellrohrabschnitte gibt es unterschiedliche Möglichkeiten.

Eine Möglichkeit besteht darin zumindest einen der Muffenrohrabschnitte, vorzugsweise die Mehrzahl der Muffenrohrabschnitte, ganz besonders bevorzugt sämtliche der Muffenrohrabschnitte so zu dimensionieren, dass ein Glattrohr-Einführabschnitt eines identisch aufgebauten Abgasrohres oder eines davon abgelängten Abtrennabschnittes nicht bis in einen benachbart zu dem Muffenrohrabschnitt angeordneten Wellrohrabschnitt einführbar ist, dass also das freie Ende eines in einem der Muffenrohrabschnitte einzuführenden Glattrohr-Einführabschnittes eines Abgasrohres oder eines Abgasrohrabschnittes in einem Starrrohrabschnitt des entsprechenden Muffenrohrabschnittes aufnehmbar ist, welcher sich auf der von der Muffenrohröffnung abgewandten Seite der Ringnut des Muffenrohrabschnitte befindet.

Um die Flexibilität des Abgasrohres oder eines daraus abgetrennten Trennabschnittes (Abgasrohrabschnittes) weiter zu erhöhen kann auch vorgesehen werden, den Muffenrohrabschnitt vergleichsweise kurz zu dimensionieren, d.h. mit einer geringen Axialerstreckung, derart, dass ein vorerwähnter Glattrohr-Einführabschnitt über den Muffenrohrabschnitt hinaus in einen benachbart zu hier angeordneten Wellrohrabschnitt eingeführt werden kann, wozu bevorzugt dieser benachbarte Wellrohrabschnitt bis nahezu an die Ringnut des Muffenrohrabschnittes reicht, dass also auf der von der Muffenrohröffnung abgewandten Seite der Ringnut nur ein axial kurzer Starrrohrabschnitt angeordnet, vorzugsweise mit einer Axialerstreckung von weniger als 5cm, noch weiter bevorzugt weniger als 3cm, ganz besonders bevorzugt weniger als 2cm oder alternativ im Wesentlichen kein Starrrohrabschnitt, so dass das freie Ende des Glattrohr-Einführabschnittes in dem benachbarten Wellrohrabschnitt aufgenommen werden kann, insbesondere derart, dass mindestens 30% der Axialerstreckung des eingeführten Glattrohrabschnittes sich innerhalb des benachbarten Muffenrohrabschnitts befindet.

Insbesondere können die Muffenrohrabschnitte für den Fall, dass diese von dem Glattrohr-Einführabschnitt durchsetzt werden sollen axial kürzer bemessen werden als die Glattrohr-Einführabschnitte, vorzugsweise um mindestens 30% kürzer.

Als besonders zweckmäßig hat es sich erwiesen, insbesondere um einen Glattrohr-Einführabschnitt durch einen, insbesondere durch Ablängen endseitig gewordenen Muffenrohrabschnitt hindurch bis in einen angrenzenden Wellrohrabschnitt einstecken zu können, wenn der freie (Innen-)Durchmesser des an den Muffenrohrabschnitt angrenzenden Wellrohrabschnittes, also der von den sich nach radial innen erstreckenden Wellentälern begrenzte freie (Innen-) Durchmesser so bemessen ist, dass dieser dem Außendurchmesser der Glattrohrabschnitte zuzüglich eines Spiel entspricht, um die Aufnahme des Glattrohr-Einführabschnittes in dem an dem Muffenrohrabschnitt angrenzenden Wellrohrabschnitt zu ermöglichen. Ganz besonders bevorzugt weist der gesamte Wellrohrabschnitt über seine axiale Länge den vorgenannten freien Innendurchmesser auf, oder, wie erwähnt, nur in einem an dem jeweiligen Muffenrohrabschnitt angrenzenden Axialabschnitt. Bevorzugt erstreckt sich der freie Innendurchmesserbereich mit einem Innendurchmesser, der dem Außendurchmesser der Glattrohrabschnitte zuzüglich eines Spiel entspricht mindestens über drei axial benachbarte Wellenberge und Wellentäler des an dem Muffenrohrabschnitt angrenzenden Wellrohrabschnittes, bevorzugt aber mindestens fünf Wellenberge und/oder Wellentäler.

Insgesamt gibt es im Hinblick auf die Gestaltung der Wellrohrabschnitte unterschiedliche Möglichkeiten. So ist es denkbar, sämtliche oder ein Teil der Wellrohrabschnitte axial durchgehend mit dem gleichen freien Innendurchmesser auszugestalten, wobei der freie Innendurchmesser gemäß einer Variante dem Außendurchmesser der Glattrohrabschnitte zuzüglich eines Spiels entsprechen kann. Alternativ ist der axial durchgehende freie Innendurchmesser geringer als der zuvor definierte Innendurchmesser und entspricht ganz besonders bevorzugt zumindest näherungsweise dem Innendurchmesser der Glattrohrabschnitte oder ist alternativ noch geringer.

Auch ist es möglich, zwei unterschiedliche Arten von Wellrohrabschnitten in einem Abgasrohr vorzusehen, die sich hinsichtlich des freien Innendurchmessers unterscheiden. Eine Art von Wellrohrabschnitten, insbesondere die auf der der durch Ablängen bzw. Trennen herzustellenden Muffenrohröffnung abgewandten Axialseite des Ringwulstes an die Muffenrohrabschnitte angrenzenden Wellrohrabschnitte weisen dabei bevorzugt einen freien Innendurchmesser auf, der dem Außendurchmesser der Glattrohrabschnitte zuzüglich eines Spiels entspricht, um Glattrohr-Einführabschnitte abschnittsweise darin aufnehmen zu können. Eine weitere (andere) Art von Wellrohrabschnitten in demselben Abgasrohr weist bevorzugt einen geringeren freien Innendurchmesser auf, insbesondere dergestalt, dass der freie Innendurchmesser zumindest näherungsweise dem Innendurchmesser der Glattrohrabschnitte entspricht.

Auch ist es möglich, zumindest einen der Wellrohrabschnitte, vorzugsweise mehrere Wellrohrabschnitte oder sämtliche Wellrohrabschnitte derart auszugestalten, dass diese zwei axial benachbarte, insbesondere axial aneinander angrenzende bzw. über einen Übergangsabschnitt ineinander übergehende Abschnitte (Innendurchmesserabschnitte) aufweisen, die sich hinsichtlich der Größe des freien Innendurchmessers unterscheiden, wobei es besonders bevorzugt ist für den Fall, dass solche Wellrohrabschnitte an einen der Muffenrohrabschnitte angrenzen, dass der an den Muffenrohrabschnitt angrenzende Abschnitt derjenige Innendurchmesserabschnitt mit dem größeren freien Innendurchmesser ist, der dem Außendurchmesser der Glattrohrabschnitte zuzüglich eines Spiels entspricht. Anders ausgedrückt ist es bevorzugt, wenn zumindest einer der Wellrohrabschnitte, vorzugsweise mehrere der Wellrohrabschnitte, ganz besonders die Mehrzahl der Wellrohrabschnitte, noch weiter bevorzugt sämtliche Wellrohrabschnitte eine Durchmesserstufung des freien Innendurchmessers aufweisen.

Die zuvor in den unterschiedlichsten Ausführungsformen beschriebene Variante eines Abgasrohres mit vergleichsweise kurzen Muffenrohrabschnitten hat den Vorteil einer erhöhten Flexibilität, da die vergleichsweise starren Muffenrohrabschnitte, wie erwähnt, vergleichsweise kurz ausgestaltet sind und ein angrenzender Wellrohrabschnitt nur für den Fall ausgesteift wird, dass dieser zur Aufnahme eines Glattrohr-Einführabschnittes dienen soll - solange der Wellrohrabschnitt axial rechts und links benachbart ist von einem anderen Funktionsabschnitt weist der Wellrohrabschnitt eine normale Flexibilität auf, so dass insgesamt geringere Biegeradien realisierbar sind.

Ferner führt die Erfindung auf einen Abgasrohrabschnitt, der hergestellt ist durch Ablängen von einem Abgasrohr. Der erfindungsgemäße Abgasrohrabschnitt zeichnet sich durch einen endseitigen Muffenrohrabschnitt aus, der erst durch den Ablängvorgang zu einem endseitigen Muffenrohrabschnitt wurde, wodurch die Muffenrohröffnung eine Trennkante, insbesondere eine Schneidkante aufweist, die von diesem Ablängvorgang her rührt. Neben diesem endseitigen Muffenrohrabschnitt weist der erfindungsgemäße Abgasrohrabschnitt mindestens einen Wellrohrabschnitt und einen, bevorzugt endseitigen Glattrohrabschnitt auf. Besonders bevorzugt umfasst der Abgasrohrabschnitt mehrere Wellrohrabschnitte und/oder mehrere Glattrohrabschnitte und ganz besonders bevorzugt zusätzlich zu dem endseitigen Glattrohrabschnitt mindestens einen weiteren, zwischen zwei Funktionsabschnitten des Rohres angeordneten, nicht endseitigen Muffenrohrabschnitt.

Realisierbar ist auch ein alternatives nicht zur Erfindung gehöriges Abgasrohr (Kopplungsrohr oder Kompensatorrohr) aus Kunststoff. Dieses zeichnet sich aus durch einen endseitigen Muffenrohrabschnitt, der eine innere Ringnut zum Einführen eines Abgasrohres mit einem Glattrohr-Einführabschnitt aufweist. Erfindungsgemäß ist nun vorgesehen, dass das Abgasrohr entlang der Längserstreckung desselben benachbart zu dem endseitigen Muffenrohrabschnitt eine Mehrzahl von nebeneinander, insbesondere unmittelbar aneinander angrenzenden Glattrohr-Einführabschnitten aufweist, die jeweils, insbesondere endseitig, einteilig mit dem Abgasrohr ausgebildete Bajonettverschlussmittel aufweisen, die derart ausgebildet sind, dass an diesen ein, bevorzugt hülsenförmiges Sicherungselement durch eine Relativverdrehbewegung zum Abgasrohr zum Herstellen eines in axialer Richtung wirksamen Formschlusses festlegbar ist. Bevorzugt sind die Bajonettverschlussmittel ausgebildet, wie zuvor im Zusammenhang mit dem (anderen erfindungsgemäßen) Abgasrohr beschrieben. Besonders zweckmäßig ist es, wenn zusätzlich zu den Bajonettverschlussmitteln jedem Glattrohr-Einführabschnitt ein Positionierhilfegeometriepaar (vorzugsweise wie zuvor beschrieben ausgebildet) vorgesehen ist und/oder eine Löseanschlagsgeometrie und/oder eine Fixieranschlagsgeometrie (vorzugsweise wie zuvor beschrieben ausgebildet) und/oder eine wie zuvor beschrieben ausgebildete Hügelgeometrie.

Das zuvor beschriebene (weitere) nicht zur Erfindung gehörige Abgasrohr kann auch als, insbesondere starres, Kopplungsrohr oder Kompensatorrohr bezeichnet werden. Das Kopplungs-Abgasrohr hat den Vorteil, dass erstmals ein starres Abgasrohr mit einem endseitigen Muffenrohrabschnitt enthalten ist, das beliebig ablängbar ist, so dass in jedem Fall ein starres Abgasrohr auch nach dem Ablängen ein starrer Abgasrohrabschnitt erhalten wird, der sich durch einen endseitigen Muffenrohrabschnitt und anderenends durch einen endseitigen Glattrohr-Einführabschnitt zum Einführen in einen endseitigen Muffenrohrabschnitt eines u.a. biegbare Wellrohrabschnitte aufweisenden Abgasrohres eignet. Insbesondere im Rahmen eines Rohrsystems entfaltet das Kopplungs- bzw. Kompensatorrohr zusammen mit einem nach dem Konzept der Erfindung ausgebildeten, eine Vielzahl von Muffenrohrabschnitten aufweisenden Abgasrohr erhebliche Vorteile, da mittels des Kopplungs- bzw. Kompensatorrohres etwaige Abstände zwischen einem endseitigen Muffenrohrabschnitt oder einem daraus abgetrennten Trennabschnitt und einem Rohranschluss, beispielsweise einem Kontrollrohr überwunden werden kann und das Kopplungs- bzw.- Kompensatorrohr hierzu einfach längenmäßig durch Ablängen anpassbar ist.

Realisierbar ist auch ein nicht zur Erfindung gehöriges System, umfassend ein alternatives nicht nach dem Konzept der Erfindung ausgebildetes, eine Vielzahl von Muffenrohrabschnitten aufweisendes Abgasrohr oder eines daraus hergestellten Abgasrohrabschnittes und eines Kopplungsrohrs oder eines daraus hergestellten Kopplungsrohrabschnittes, wobei das Kopplungsrohr oder der Kopplungsrohrabschnitt bevorzugt an dem Abgasrohr bzw. oder dem Abgasrohrabschnitt festgelegt ist.

Darüber hinaus führt die Erfindung auf ein System, umfassend eine Heizung, insbesondere eine Gebäudeheizung, wobei die Heizung abgasleitend verbunden ist mit einem nach dem Konzept der Erfindung ausgebildeten, eine Vielzahl von integralen Muffenabschnitten aufweisenden Muffenrohr in einem Bereich zwischen zwei gleichen oder unterschiedlichen Abgasrohrabschnitten.

Im Rahmen des Systems ist es bevorzugt, wenn das Abgasrohr einen endseitigen Muffenrohrabschnitt aufweist bzw. der durch Ablängen hergestellte Abgasrohrabschnitt einen endseitigen Muffenrohrabschnitt, der durch das Ablängen entstanden ist, d.h. der sich durch eine Trenn-, insbesondere Schneidkante auszeichnet. In diesen endseitigen Muffenrohrabschnitt ist nun ein Glattrohr- oder ein Abgasrohr mit einem Glattrohr-Einführabschnitt eingeführt, wobei bevorzugt entweder das freie Ende des Glattrohrs bzw. Glattrohr-Einführabschnittes in einem Starrohrabschnitt des Muffenrohrabschnittes auf der von der Muffenrohröffnung abgewandten Seite der bevorzugt mit einer Ringdichtung, insbesondere einer Lippendichtung versehenen Ringnut endet oder alternativ axial weitergeführt ist bis in einen, vorzugsweise zumindest näherungsweise bis zu der Ringnut reichenden Wellrohrabschnitt des Abgasrohrs bzw. des Abgasrohrabschnittes, wobei bevorzugt der freie Innendurchmesser zumindest eines Abschnitts dieses Wellrohrabschnittes dem Außendurchmesser des Glattrohrs bzw. Glattrohr-Einführabschnitts zuzüglich eines Spiels entspricht.

In Weiterbildung der Erfindung ist mit Vorteil vorgesehen, dass in einen endseitigen Muffenrohrabschnitt des Abgasrohres oder einen durch Abtrennen endseitigen Muffenrohrabschnitt des Abgasrohrabschnittes ein Glattrohr oder ein Abgasrohr mit einem Glattrohr-Einführabschnitt eingeführt ist, wobei entweder das axiale freie Ende des Glattrohrs oder des Glattrohr-Einführabschnittes in einem Starrohrabschnitt des Muffenrohrabschnittes aufgenommen ist oder axial bis in einen an den Muffenrohrabschnitt angrenzenden Wellrohrabschnitt eingeführt ist.

Ferner führt die Erfindung auf ein Verfahren zum Herstellen eines Trennabschnittes aus einem erfindungsgemäßen Abgasrohr. Dabei wird gemäß einer ersten Verfahrensalternative das Abgasrohr benachbart zu einem der beidseitig zwischen zwei Abgasrohrabschnitten angeordneten Muffenrohrabschnitte senkrecht zur Abgasrohrlängserstreckung, insbesondere an einer entsprechenden Trennmarkierung, durchtrennt, wodurch dieser Muffenrohrabschnitt zu einem endseitigen, eine Trennkante aufweisenden Muffenrohrabschnitt des resultierenden Abgasrohrabschnittes (Trennabschnittes) wird, in dessen durch das vorerwähnte Trennen entstandene Muffenrohreinführöffnung ein Rohr, insbesondere ein Glattrohr-Einführabschnitt eines anderen, insbesondere nach dem Konzept der Erfindung ausgebildeten Abgasrohres oder eines daraus hergestellten Abgasrohrabschnittes einführbar ist.

Bevorzugt zeichnet sich der resultierende, endseitig mindestens einen Muffenrohrabschnitt aufweisende Abgasrohrabschnitt (Trennabschnitt) dadurch aus, dass dieser zusätzlich zu dem endseitigen Muffenrohreinführabschnitt mindestens einen Glattrohr-Einführabschnitt und/oder mindestens einen biegbaren Wellrohrabschnitt und/oder mindestens einen weiteren Muffenrohrabschnitt aufweist, wobei das dem Muffenrohrabschnitt gegenüberliegende Abgasrohrabschnittsende bevorzugt von einem Glattrohr-Einführabschnitt oder alternativ einem weiteren Muffenrohrabschnitt gebildet ist, wobei letzterer ein bereits ursprünglich endseitiger Muffenrohrabschnitt sein kann oder ein Muffenrohrabschnitt, dessen Muffenrohröffnung erst entsteht durch Abtrennen des Abgasrohres benachbart zu diesem weiteren Muffenrohrabschnitt. Anders ausgedrückt wird dieser weitere Muffenrohrabschnitt bevorzugt erst zu einem endseitigen Muffenrohrabschnitt durch Trennen bzw. Ablängen eines Abgasrohres.

Der durch Ablängen hergestellte Abgasrohrabschnitt mit seinem durch Ablängen entstandenen endseitigen Muffenrohrabschnitt zeichnet sich dadurch aus, dass der endseitige Muffenrohrabschnitt eine Trennkante, insbesondere eine Schneidkante aufweist, die aus dem zuvor beschriebenen Trenn-, insbesondere Schneidschritt resultiert.

Gemäß einer alternativen zweiten Ausführungsform des erfindungsgemäßen Verfahrens wird das nach dem Konzept der Erfindung ausgebildete Abgasrohr an einer Axialposition insbesondere einer durch eine Trennmarkierung markierten Trennposition oder an zwei axial beabstandeten Axialpositionen bzw. Trennpositionen derart getrennt, dass ein Abgasrohrabschnitt (Trennabschnitt) resultiert, der sich durch zwei endseitige Glattrohr-Einführabschnitte auszeichnet, bevorzugt jeweils aufweisend angeformte, d.h. einstückig mit dem Abgasrohr ausgebildete Bajonettverschlussmittel. Bevorzugt zeichnet sich der abgetrennte Abgasrohrabschnitt zusätzlich aus durch mindestens einen zwischen den endseitigen Glattrohr-Einführabschnitten angeordneten biegbaren Wellrohrabschnitt und/oder mindestens einen dazwischen angeordneten Muffenrohrabschnitt und/oder mindestens einen dazwischen angeordneten Glattrohr-Einführabschnitt.

Für den bevorzugten Fall der Realisierung der ersten Verfahrensalternative ist in Weiterbildung der Erfindung vorgesehen, dass, insbesondere nach dem Abtrennen des Abgasrohrabschnittes (Trennabschnittes) in die Ringnut des (nun) endseitigen Muffenrohrabschnittes eine Ringdichtung eingelegt und bevorzugt danach ein Rohr, insbesondere ein Glatt-Einführabschnitt des Rohres oder Trennabschnittes.

In Weiterbildung der Erfindung ist mit Vorteil vorgesehen, dass in die Ringnut des endseitigen Muffenrohrabschnittes eine Ringdichtung eingelegt wird und bevorzugt danach ein Rohr, insbesondere ein Glattrohr-Einführabschnitt eines anderen Abgasrohres oder Abgasrohrabschnittes eingeführt wird, axial mit seinem Ende bis über die Ringdichtung hinaus.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 bis Fig. 3: unterschiedliche, nach dem Konzept der Erfindung ausgebildete, einstückige Kunststoff-Abgasrohre,
- Fig. 4:: ein Ausführungsbeispiel eines nicht erfindungsgemäßen Kopplungsabgasrohres zu Erläuterungszwecken,
- Fig. 5a und 5b:: unterschiedliche Ansichten des nicht erfindungsgemäßen Kopplungsabgasrohres gemäß Fig. 4 mit daran festgelegten, hier aufgeschnapptem, hülsenförmigen Sicherungselement,
- Fig. 6a und 6b:: eine alternative Ausführungsform eines nur ausschnittsweise dargestellten Kunststoff-Abgasrohres mit axial kurzen Muffenrohrabschnitten, und
- Fig. 7a und 7b:: eine weitere alternative Ausführungsform eines Kunststoff-Abgasrohres mit kurzen Muffenrohrabschnitten.

In den Figuren sind gleiche Elemente und Elemente mit der gleichen Funktion mit den gleichen Bezugszeichen gegenzeichnet.

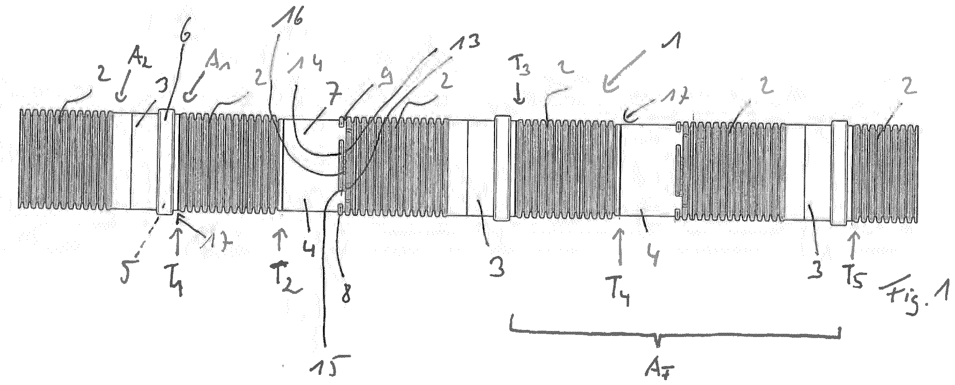

Fig. 1 zeigt ein nach dem Konzept der Erfindung ausgebildetes, nur ausschnittsweise dargestelltes, einteiliges Abgasrohr aus Kunststoff. Das Abgasrohr weist eine Vielzahl von Wellrohrabschnitten 2 auf, die für die Flexibilität bzw. Biegbarkeit des Abgasrohres 1 Sorge tragen. Die Wellrohrabschnitte 2 weisen in dem Beispiel eine Vielzahl von jeweils kreisringförmigen, alternierend angeordneten Wellenberge und Wellentäler auf. Alternativ ist auch eine Ausführung mit einer Außengewindeform, d.h. einer sich wendelförmig erstreckenden bzw. eine Steigung aufweisende Welle realisierbar. Die einzelnen Wellrohrabschnitte 2 sind jeweils in Richtung der Abgasrohrlängserstreckung voneinander beabstandet über hiervon eine unterschiedliche Funktionalität aufweisenden Rohrabschnitte. So umfasst das Abgasrohr 1 neben der Mehrzahl von Wellrohrabschnitten 2 auch eine Mehrzahl von Muffenrohrabschnitten 3 sowie von Glattrohr-Einführabschnitten 4.

Das Abgasrohr 1 kann beispielsweise durch Sägen oder Schneiden an unterschiedlichen Axialpositionen (Trennpositionen T) senkrecht zu seiner Längserstreckung unterteilt bzw. getrennt werden, wobei der dann jeweils endseitige Rohrabschnitt des hergestellten Trennabschnittes eine Trennkante aufweist und die Anschlusssituation des herausgetrennten Trennabschnittes bestimmt.

In dem konkreten Ausführungsbeispiel ist das Abgasrohr 1 so aufgebaut, dass dieses eine Abgasrohrabschnittsfolge A_{F} aufweist, die sich in Richtung der Längserstreckung des Abgasrohres immer wieder wiederholt, d.h. eine Vielzahl solcher Abgasrohrabschnittsfolgen A_{F} grenzen axial unmittelbar immer wieder aneinander an. In dem konkreten Ausführungsbeispiel besteht jede Abgasrohrabschnittsfolge A_{F} aus folgenden Abgasrohrabschnitten: biegbarer Wellrohrabschnitt, Glattrohr-Einführabschnitt, biegbarer Wellrohrabschnitt und Muffenrohrabschnitt. Die Soll-Muffenrohr-einführöffnungen der Muffenrohrabschnitte 3 weisen in dieselbe Axialrichtung, hier in der Zeichnung nach rechts.

Besonders interessant sind bei dem nach dem Konzept der Erfindung ausgebildeten Abgasrohr 1 die Muffenrohrabschnitte 3, hier dargestellt die nicht-endseitigen Muffenrohrabschnitte 3, die sich dadurch auszeichnen, dass an beide Axialseiten jedes Muffenrohrabschnittes 3 ein weiterer Abgasrohrabschnitt angrenzt.

Betrachtet man beispielsweise den in der Zeichnungsebene linken Muffenrohrabschnitt 3, so grenzt an einer ersten Axialseite des Muffenrohrabschnittes 3 an diesen unmittelbar ein Wellrohrabschnitt 2 an und gegenüberliegend an der zweiten Axialseite - hier beispielhaft wieder ein biegbarer Wellrohrabschnitt 2.

Durch Trennen des Abgasrohres 1 beispielsweise an der Trennposition T₁ wird der Muffenrohrabschnitt 3 zu einem endseitigen, eine Trennkante aufweisenden Muffenrohrabschnitt 3, wobei die resultierende Muffenrohreinführöffnung einen Innendurchmesser aufweist, der dem Außendurchmesser eines jeden der Glattrohr-Einführabschnitte 4 zzgl. eines Spiels entspricht, so dass ein solcher (dann endseitiger) Glattrohr-Einführabschnitt 4 axial in die Muffenrohreinführöffnung eingeführt bzw. eingesteckt werden kann. Zur Herstellung einer abgasdichten Verbindung zwischen dem dann endseitigen Muffenrohrabschnitt 3 und einem eingeführten Glattrohr-Einführabschnitt 4 weisen die Muffenrohrabschnitte 3 innere, über eine strichlierte Bezugszeichenlinie gekennzeichnete Ringnuten 5 auf, die innerhalb jeweils eines Ringwulstes 6 jedes Muffenrohrabschnittes 3 ausgebildet sind. In die Ringnuten 5 kann eine elastomere Ringdichtung eingelegt werden, die sich dann radial außen an einen Zylinderabschnitt 7 eines eingeführten Glattroh-Einführabschnittes 4 abstützt. Das Abgasrohr 1 muss jedoch nicht zwingend an der Trennposition T₁ getrennt werden. Wird das Abgasrohr 1 beispielsweise an der Trennposition T₂ getrennt, die hier beispielsweise zwischen einem Wellrohrabschnitt 2 und einem Glattrohr-Einführabschnitt 4 ausgebildet ist, resultiert in der Zeichnungsebene rechts ein Trennabschnitt mit einem endseitigen Glattrohr-Einführabschnitt 4, welcher dann beispielsweise in einen endseitigen Muffenrohrabschnitt 3 eines anderen Trennabschnittes oder eines anderen Abgasrohres eingeschoben werden kann.

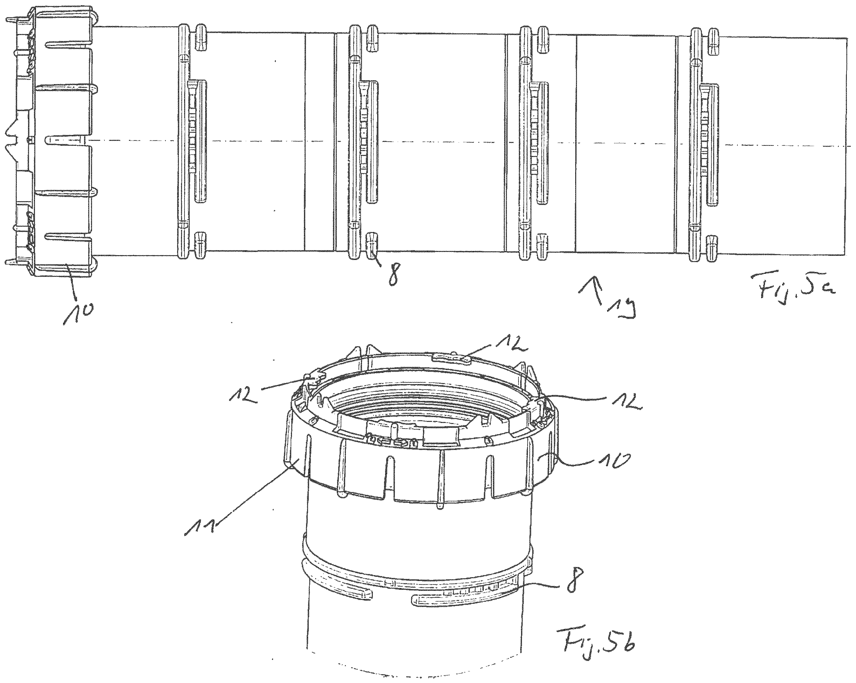

Aus Fig. 1 ist weiter zu entnehmen, dass jedem Glattrohr-Einführabschnitt 4 Bajonettverschlussmittel 8 zugeordnet sind, die einstückig mit dem Abgasrohr 1 ausgebildet sind. Die Bajonettverschlussmittel 8 umfassen mehrere in Umfangsrichtung beabstandete und sich in Umfangsrichtung erstreckende Erhebungen 9, die mit einem beispielsweise in Fig. 5b gezeigten, ringförmigen Sicherungselement 10 zusammenwirken können, dass auf der anderen Seite einen Ringwulst eines Muffenrohrabschnittes oder eines Muffenrohres umgreift. Das Sicherungselement 10 weist zur erleichterten Montage bevorzugt endseitig in radialer Richtung bezogen auf eine Axialerstreckung des Sicherungselementes 10 federnde Laschen 11 auf, die es ermöglichen, das Sicherungselement 10 auf einen Muffenrohrabschnitt 3, genauer auf dessen Ringwulst aufzuschieben und somit auf einen Ringwulst des Muffenrohrabschnittes 3 aufzuklipsen. Ferner umfasst das Sicherungselement 10 sicherungselementseitige Bajonettverschlussmittel 12, hier ausgebildet von in radialer Richtung nach innen weisenden Fortsätzen, die durch eine Steck-Dreh-Bewegung in axialer Richtung formschlüssig mit den Bajonettverschlussmitteln 8 des Abgasrohres 1 bzw. der Glattrohr-Einführabschnitte 4 des Abgasrohres 1 zusammenwirken können.

Zu erkennen ist weiterhin, dass den Bajonettverschlussmitteln 8 Positionierhilfegeometriepaare 13 zugeordnet sind, die eine Widerstandsgeometrie 14 sowie eine Anschlagsgeometrie 15 umfassen. Die Anschlagsgeometrie 15 bildet gleichzeitig eine Löseanschlagsgeometrie, die eine Drehposition kennzeichnet, in der ein Glattrohr-Einführabschnitt 4 bzw. dessen Bajonettverschlussmittel 8 durch eine reine Axialbewegung von einem Sicherungselement getrennt werden können.

Vor der jeder Anschlaggeometrie 15 befindet sich eine Hügelgeometrie um ein Ratschgeräusch und/oder -haptikgefühl beim Schließen und/oder Lösen der Bajonettverschlussmittel zu erzeugen.

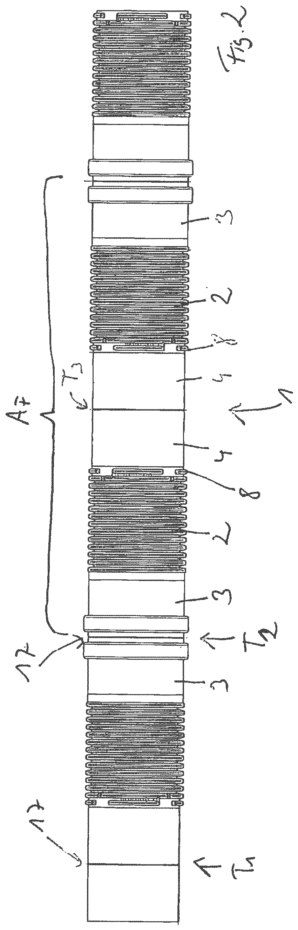

Fig. 2 zeigt eine alternative Ausführungsform eines nach dem Konzept der Erfindung ausgebildeten Abgasrohres 1. Hier wiederholt sich eine andere Abgasrohrabschnittsfolge A_{F} bestehend aus Muffenrohrabschnitt 3, Wellrohrabschnitt 2, Glattrohr-Einführabschnitt 4, Glattrohr-Einführabschnitt 4, Wellrohrabschnitt 2 und Muffenrohrabschnitt 3. Auf die bezogen auf die Abgasrohrabschnittsfolge endseitigen Muffenrohrabschnitte 3 ist anzumerken, dass deren Soll-Muffenrohreinführöffnungen in unterschiedliche Axialrichtungen weisen, so dass immer im Übergang zur angrenzenden Abgasrohrabschnittsfolge unmittelbar zwei Muffenrohrabschnitte 3 jeweils mit ihrer Soll-Einführöffnung aneinander angrenzen.

Werden derartig angeordnete Muffenrohrabschnitte 3, hier an einer axialen Trennposition T₂ voneinander getrennt, resultieren zwei Trennabschnitte mit jeweils einem endseitigen Muffenrohrabschnitt 3 der sich durch eine Trennkante auszeichnet. Jeder endseitige Muffenrohrabschnitt 3 weist dann eine Einführöffnung auf, deren Innendurchmesser dem Außendurchmesser der Glattrohr-Einführabschnitte 4 zzgl. eines Spiels entspricht.

Bei dem gezeigten Ausführungsbeispiel grenzen auch jeweils zwei Glattrohr-Einführabschnitte 4 aneinander, und zwar in einem von den jeweiligen Bajonettverschlussmitteln 8 abgewandten axialen Bereich. Durch Trennen an einer axialen Trennposition T₃ werden zwei Trennabschnitte mit jeweils endseitigem Glattrohr-Einführabschnitt 4 zum Einstecken in einen (endseitigen) Muffenrohrabschnitt 3 erhalten.

Bei dem Ausführungsbeispiel in Fig. 2, wie auch bei den anderen Ausführungsbeispielen sind die Trennpositionen T jeweils mit einer Trennmarkierung 17 markiert, die bevorzugt in Form einer umlaufenden Rille ausgebildet ist.

Selbstverständlich sind auch Abwandlungen des Abgasrohrs 1 gemäß Fig. 2 realisierbar, beispielsweise derart, dass anstelle von jeweils unmittelbar aneinander angrenzenden Glattrohr-Einführabschnitten dort jeweils nur ein einziger Glattrohr-Einführabschnitt 4 vorgesehen ist.

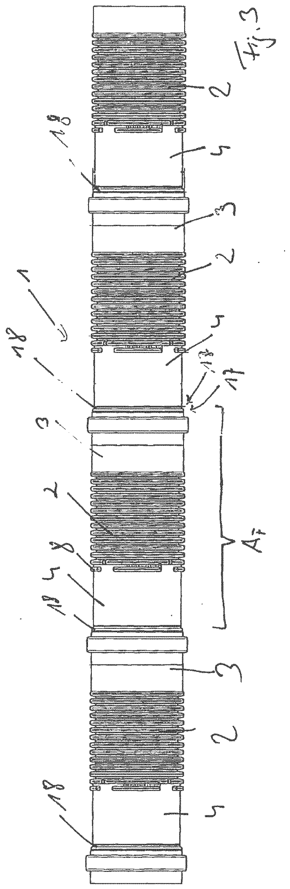

Fig. 3 zeigt wiederum eine alternative Ausführungsform eines einstückigen, nach dem Konzept der Erfindung ausgebildeten Abgasrohres. Hier ist eine besonders kurze Abgasrohrabschnittsfolge A_{F} realisiert. Diese besteht aus der Folge der Rohrabschnitte: Glattrohr-Einführabschnitt 4, biegbarer Wellrohrabschnitt 2, Muffenrohrabschnitt 3, Übergangsabschnitt 18. Zu erkennen ist dass der kurze Übergangsabschnitt 18 jeweils einen Muffenrohrabschnitt 3 mit einem Glattrohr-Einführabschnitt 4 verbindet und einen Durchmessersprung überwindet. Bei beiden Axialseiten jedes Übergangsabschnitts 18 ist jeweils eine Trennmarkierung 17 vorgesehen, die sich durch einen unterschiedlichen Durchmesser voneinander unterscheiden. Wird beispielsweise das Abgasrohr 1 an der linken der eingezeichneten Trennmarkierungen 17 getrennt, so wird ein endseitiger Muffenrohrabschnitt 3 eines Trennabschnittes erhalten, dessen Einführöffnung zur Aufnahme eines Glattrohr-Einführabschnittes 4 geeignet und bestimmt ist. Durch die Trennung an der rechten Trennmarkierung 17 wird ein endseitiger Glattrohr-Einführabschnitt 4 erhalten.

Bevorzugt erfolgt zur geschickten Wiederverwendung beider resultierender Trennabschnitte für den Fall der Trennung des Abgasrohres 1 an einem Übergangsabschnitt 18 eine Trennung zu beiden Axialseiten des Übergangsabschnittes 18, um somit beide resultierenden Trennabschnitte verwenden zu können.

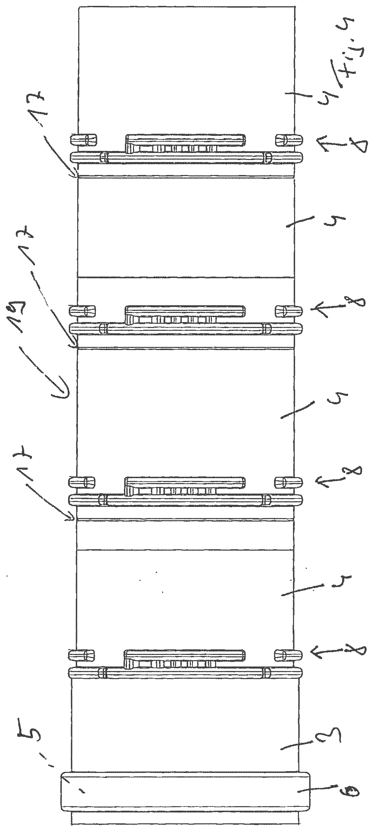

Fig. 4 zeigt ein als Abgasrohr ausgebildetes Kopplungsrohr 19. Dieses ist als starres Abgasrohr konzipiert und umfasst einen einzigen, endseitigen Muffenrohrabschnitt 3 mit Ringwulst 6 und innerer Ringnut 5. Axial an den Muffenrohrabschnitt grenzen eine Vielzahl jeweils wieder unmittelbar benachbarter Glattrohrabschnitte 4 an, jeweils umfassend Bajonettverschlussmittel 8. Das Abgasrohr ist an Trennmarkierungen 17 ablängbar, um dann immer einen Trennabschnitt zu erhalten, der sich durch ein endseitigen Muffenrohrabschnitt 3 und einen davon abgewandten, endseitigen Glattrohr-Einführabschnitt 4 auszeichnet.

Zu erkennen ist auch die spezielle Ausbildung der BajonettVerschlussmittel bzw. der diesen zugeordneten Positionierhilfegeometriepaaren sowie der Anschlagsgeometrie, der Löseanschlagsgeometrie sowie der Hügelgeometrie. Bevorzugt ist diese ausgebildet wie bei den alternativen erfindungsgemäßen Abgasrohren gemäß den Fig. 1 bis 3.

In den Fig. 5a bis 5b ist das Kopplungsrohr 19 bestückt mit einem Sicherungselement 10, wie dieses bevorzugt auch Anwendung finden kann mit einem Abgasrohr 1 bzw. einem daraus hergestellten Trennabschnitt der Fig. 1 bis 3 oder Abwandlungen davon. Das ringförmige Sicherungselement weist, wie bereits erläutert, federnde Laschen 11 zum axialen Aufklipsen auf einen Ringwulst eines endseitigen Muffenrohrabschnittes 3 auf sowie sicherungselementseitige Bajonettverschlussmittel 12 zum Zusammenwirken mit Bajonettverschlussmitteln eines Abgas- bzw. Kopplungsrohres.

Bevorzugt wird das Kopplungsrohr 19 nach dessen Herstellung bereits mit einem Sicherungselement 10 bestückt.

Die im Folgenden erläuterten Abgasrohre und Systeme entsprechen vom grundsätzlichen Aufbau den in den Fig. 1 bis 3 gezeigten Varianten oder sind daraus ausgebildet, so dass zur Vermeidung von Wiederholungen im Hinblick auf die Gemeinsamkeiten auf die vorstehende Figurenbeschreibung zuzüglich Figuren verwiesen wird. Im Folgenden wird im Wesentlichen nur auf die Unterschiede zu den vorangehenden Ausführungsbeispielen eingegangen.

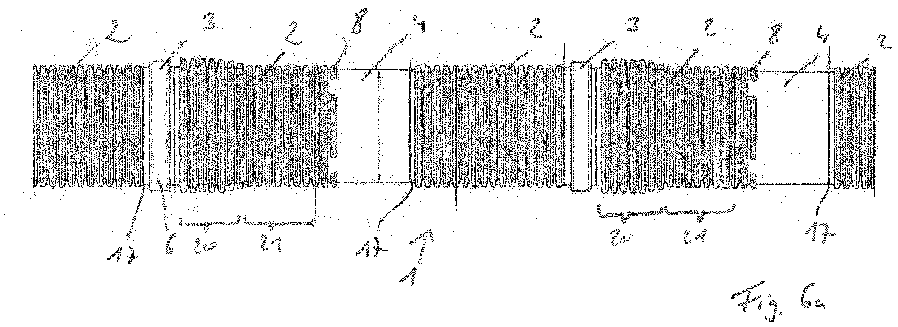

Fig. 6a zeigt nun ausschnittsweise ein alternatives Abgasrohr 1 mit einer Mehrzahl von (inneren) Muffenrohrabschnitten 3, an die zu beiden Axialseiten jeweils ein Funktionsabschnitt angrenzt. Das Abgasrohr 1 umfasst zudem mehrere Glattrohr-Einführabschnitte 4 mit fakultativen Bajonettverschlussmitteln 8 sowie eine Vielzahl von Wellrohrabschnitten 2.

Zu erkennen ist, dass in dem gezeigten Ausführungsbeispiel unterschiedliche Arten von Wellrohrabschnitten 2 vorgesehen sind. So grenzt beispielsweise in der Zeichnungsebene rechts an die Muffenrohrabschnitte jeweils ein Wellrohrabschnitt 2 an, der sich durch einen freien Innendurchmessersprung auszeichnet, wobei der freie Innendurchmesser eines ersten Axialabschnittes 20 (erster Innendurchmesserabschnitt), der axial an den jeweiligen Muffenrohrabschnitt 3 angrenzt an einer von einer durch Ablängen herzustellenden Muffenrohröffnung abgewandten Axialseite der Muffenrohrringwulste einen freien, d.h. von den Wellentälern begrenzten Innendurchmesser aufweist, der dem Außendurchmesser der Glattrohr-Einführabschnitte 4 zuzüglich eines Spiels entspricht, um nach dem Ablängen des Abgasrohres 1 und damit Schaffen bzw. Freilegen einer Muffenrohröffnung, bevorzugt als Markierungsrinne ausgebildete Trennmarkierung 17, d.h. an einer Trenngeometrie in die so geschaffene eine Trennkante aufweisende Muffenrohröffnung einen Glattrohr-Einführabschnitt 4 einführen zu können axial bis über den Ringwulst 6 des Muffenrohrabschnittes 3 mit Ringwulst 6 mit innenliegender Ringnut 5 zur Dichtungsaufnahme hinaus bis in den ersten Axialabschnitt 20 des angrenzenden Wellrohrabschnittes 2 hinein. Neben dem ersten Axialabschnitt 20 weisen die vorgenannten Wellrohrabschnitte 2 einen axial benachbarten zweiten Axialabschnitt 21 auf (zweiter Innendurchmesserabschnitt), der einen geringeren freien Innendurchmesser aufweist, der bevorzugt zumindest näherungsweise dem Innendurchmesser der Glattrohr-Einführabschnitte 4 entspricht. Daneben bzw. weiterhin gibt es Wellrohrabschnitte 2, die keinen Durchmessersprung bzw. keine Innendurchmesserstufe aufweisen sondern die durchgängig den gleichen freien Innendurchmesser aufweisen, der hier beispielhaft dem Innendurchmesser der Glattrohr-Einführabschnitte 4 entspricht.

Alternativ ist es auch möglich, dass zusätzlich oder alternativ zu den "gestuften" Wellrohrabschnitten 2 Wellrohrabschnitte 2 vorgesehen sind, die axial durchgehend ausgebildet sind wie die ersten Axialabschnitte 20, d.h. die einen axial durchgehenden freien Innendurchmesser aufweisen, der dem Außendurchmesser der Glattrohr-Einführabschnitte 4 zuzüglich eines Spiels entspricht. Solche Wellrohrabschnitte 2 können in einem Abgasrohr 1 kombiniert werden mit den gezeigten, axial durchgehend einen geringeren freien Innendurchmesser aufweisenden Wellrohrabschnitten 2 und/oder mit den gezeigten Wellrohrabschnitten 2 mit gestuftem freien Querschnitt.

Die gezeigte Variante eines Abgasrohrs 1 hat gegenüber den Fig. 1 bis 3 gezeigten Varianten den Vorteil einer erhöhten Flexibilität, da die Muffenrohrabschnitte 3 vergleichsweise kurz ausgestaltet sind und ein erster Axialabschnitt 20 eines Wellrohrabschnittes 2 nur dann ausgesteift wird, für den Fall, dass dieser zur Aufnahme eines Endes eines Glattrohr-Einführabschnittes 4 genutzt wird - ansonsten hat dieser bevorzugt eine ähnliche Flexibilität wie die Flexrohrabschnitte in den Ausführungsbeispielen gemäß den Fig. 1 bis 3.

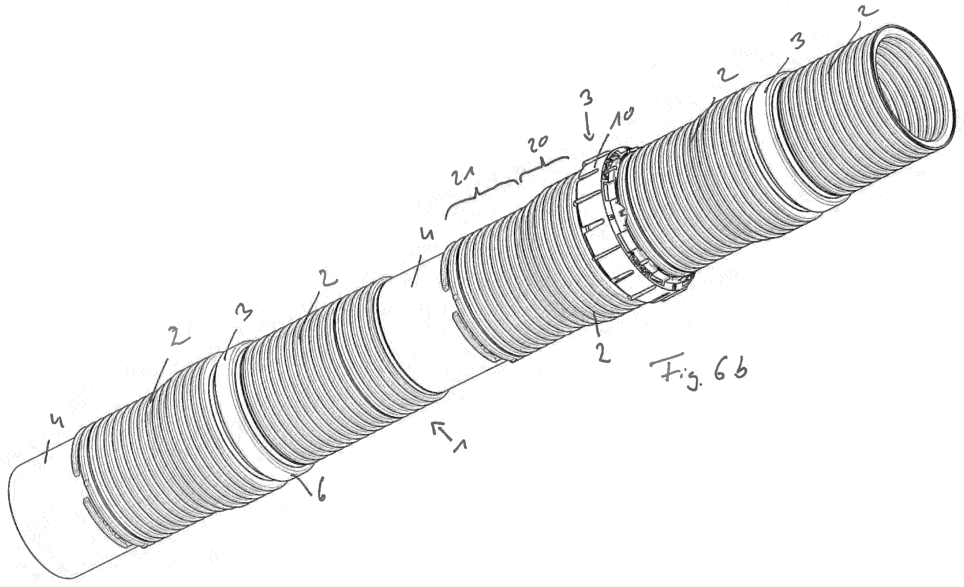

In Fig. 6b ist ein System gezeigt, welches hergestellt ist aus einem erfindungsgemäßen Abgasrohr 1, an dem in der Zeichnungsebene rechts ein Abgasrohrabschnitt mit einem endseitigen Glattrohr-Einführabschnitt 4 eingeführt und mit Hilfe von Sicherungsmitteln 10 axial gesichert ist, die mit den Bajonettverschlussmitteln des endseitigen Glattrohr-Einführabschnitts 4 in Wechselwirkung treten. Zu erkennen ist, dass an dem an der Verbindung beteiligten Muffenrohrabschnitt 3 ein Wellrohrabschnitt 2 mit einem ersten Axialabschnitt 20 angrenzt, dessen freier Innendurchmesser dem Außendurchmesser der Glattrohr-Einführabschnitte 4 zuzüglich eines Spiels entspricht, so dass der Glattrohr-Einführabschnitt 4 des rechts angrenzenden Abgasrohres 1 bzw. Trennabschnitts axial hierin eingeführt werden kann.

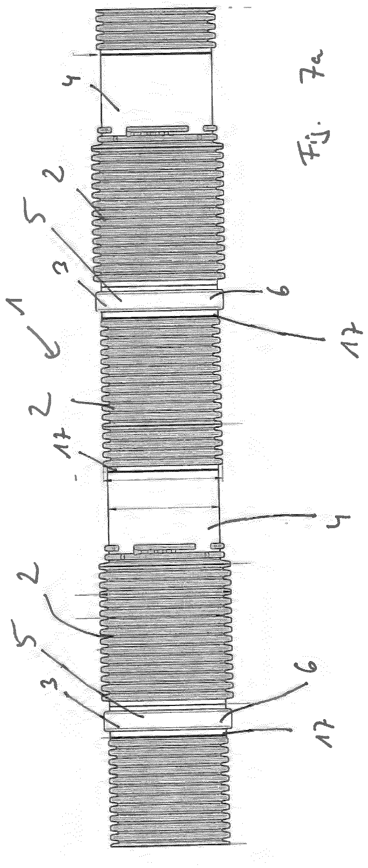

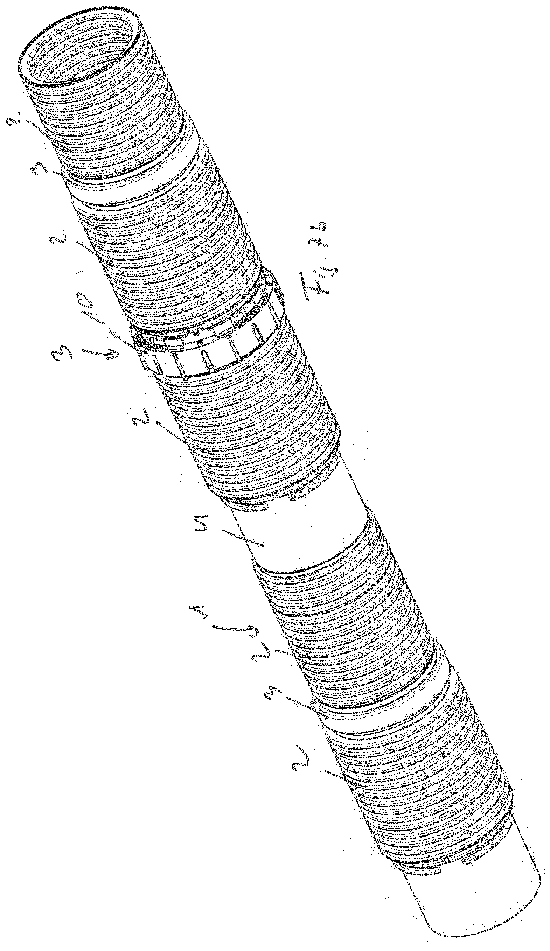

Im Folgenden wird ein alternatives Ausführungsbeispiel eines Abgasrohres gemäß Fig. 7a sowie ein ein solches Abgasrohr umfassendes System gemäß Fig. 7b erläutert. Diese Ausführungsbeispiele entsprechen im Wesentlichen den Ausführungsbeispielen gemäß den Fig. 6a und 6b, so dass zur Vermeidung von Wiederholungen im Wesentlichen nur auf die Unterschiede zu diesem Ausführungsbeispiel eingegangen wird. Im Hinblick auf die Gemeinsamkeiten wird auf die vorstehende Figurenbeschreibung sowie die entsprechenden Figuren verwiesen.

Im Unterschied zu dem Ausführungsbeispiel gemäß Fig. 6a weist das Abgasrohr gemäß Fig. 7a keine hinsichtlich des freien Innendurchmessers gestufte Wellrohrabschnitte auf. Stattdessen weisen sämtliche Wellrohrabschnitte 2 axial durchgehend einen freien Innendurchmesser auf, wobei in dem gezeigten Ausführungsbeispiel zwei Arten von Wellrohrabschnitten 2 mit voneinander unterschiedlichem freien InnenDurchmesser vorgesehen sind. Bei einer alternativ realisierbaren Ausführungsform können sämtliche Wellrohrabschnitte 2 auch den gleichen freien Innendurchmesser aufweisen.

Zu erkennen ist, dass die an die Muffenrohrabschnitte 3 an der von der jeweiligen Trennmarkierung 17 bzw. herzustellenden Muffenrohröffnung abgewandten Axialseite des jeweiligen Ringwulstes 6 bzw. der jeweiligen Ringnut 5 angrenzenden Wellrohrabschnitte 2 einen (größeren) freien, von den Wellentälern begrenzten Innendurchmesser aufweisen, der so bemessen ist, dass dieser dem Außendurchmesser der Glattrohr-Einführabschnitte 4 zuzüglich eines Spiels entspricht, um ein Rohr mit einem Außendurchmesser der Glattrohrabschnitte axial über den jeweiligen Muffenrohrabschnitt 3 hinaus bis in den benachbarten Wellrohrabschnitt 2 hineinstecken zu können. Nur für diesen Fall wird ein an einem Muffenrohrabschnitt 3 angrenzender Wellrohrabschnitt 2 ausgesteift - ansonsten sorgt dieser axial durchgehend für die notwendige Flexibilität des gesamten Abgasrohres 1.

Die nicht zur abschnittsweisen Aufnahme eines Glattrohr-Einführabschnittes 4 ausgebildeten Wellrohrabschnitte 2, die in dem gezeigten Ausführungsbeispiel unmittelbar an eine Trennmarkierung 17 eines Muffenrohrabschnittes 3 angrenzen bzw. auf der anderen Axialseite an einem Glattrohr-Einführabschnitt 4 weisen einen geringen freien Innendurchmesser auf, der in dem gezeigten Ausführungsbeispiel beispielhaft dem Innendurchmesser der Glattrohrabschnitte 4 entspricht.

Bei Bedarf, können, wie erwähnt, auch diese Wellrohrabschnitte 2, zumindest zum Teil, mit dem größeren freien Innendurchmesser realisiert werden. Auch ist die Kombination mit hinsichtlich des freien Innendurchmessers gestuften Wellrohrabschnitten, wie diese in Fig. 6a gezeigt sind, möglich.

Das System in Fig. 7b entspricht dem System gemäß Fig. 6b mit dem Unterschied, dass anstelle des in Fig. 6a gezeigten Abgasrohres ein in Fig. 7a gezeigtes Abgasrohr 1 Teil des Systems ist. Dieses in der Zeichnungsebene links dargestellte Abgasrohr ist mit einem weiteren, rechts dargestellten Abgasrohr oder Abgasrohrabschnitt über Sicherungsmittel 10 verbunden, die mit Bajonettverschlussmitteln dieses weiteren (rechten) Abgasrohrabschnittes sowie mit dem Ringwulst eines endseitigen Muffenrohrabschnittes 3 des in der Zeichnungsebene linken Abgasrohres oder eines daraus hergestellten Abgasrohrabschnittes in formschlüssige Wechselwirkung treten.

### Bezugszeichenliste

- 1: Abgasrohr
- 2: Wellrohrabschnitt
- 3: Muffenrohrabschnitt
- 4: Glattrohr-Einführabschnitt
- 5: Ringnut
- 6: Ringwulst
- 7: Zylinderabschnitt
- 8: Bajonettverschlussmittel
- 9: Erhebungen
- 10: Sicherungsmittel
- 11: federnde Laschen
- 12: sicherungselementseitige Bajonettverschlussmittel
- 13: Positionierhilfegeometriepaare
- 14: Widerstandgeometrie
- 15: Anschlagsgeometrie
- 16: Hügelgeometrie
- 17: Trennmarkierung
- 18: Übergangsabschnitt
- 19: Kopplungsrohr
- 20: erster Axialabschnitt
- 21: zweiter Axialabschnitt

- T: Trennpositionen

- A_{F}: Abgasrohrabschnittsfolge
- A₁: erste Axialseite
- A₂: zweite Axialseite

## Patentansprüche

1. Einstückiges Abgasrohr aus Kunststoff zur Abgasführung von Heizungsanlagen, mit einer Mehrzahl von entlang einer Abgasrohrlängserstreckung angeordneten, biegbaren Wellrohrabschnitten (2) und starren, zylindrischen Glattrohr-Einführabschnitten (4), wobei mindestens zwei der Wellrohrabschnitte (2) zwischen sich mindestens einen der Glattrohr-Einführabschnitte (4) und/oder mindestens zwei der Glattrohr-Einführabschnitte (4) mindestens einen der Wellrohrabschnitte (2) zwischen sich aufnehmen,
**dadurch gekennzeichnet,**
**dass** das Abgasrohr (1) eine Mehrzahl von über die Abgasrohrlängserstreckung verteilt angeordnete Muffenrohrabschnitte (3) aufweist, die jeweils eine innere Ringnut (5) zur Aufnahme einer Ringdichtung aufweisen und die beidseitig an einen Abgasrohrabschnitt des Abgasrohres (1) angrenzen, und dass durch Abtrennen eines dieser Abgasrohrabschnitte senkrecht zur Abgasrohrlängserstreckung eine Muffenrohreinführöffnung erzeugbar ist, deren Innendurchmesser einem Außendurchmesser der Glattrohr-Einführ-abschnitte (4) zuzüglich eines Spiels entspricht, so dass in die Muffenrohreinführöffnung axial ein Abgasrohr (1) oder ein davon abgetrennter Abgasrohrabschnitt mit einem endseitigen Glattrohr-Einführabschnitt (4) bis über die Ringnut (5) des zugehörigen Muffenrohrabschnittes (3) hinaus einsteckbar ist.

2. Einstückiges Abgasrohr nach Anspruch 1,
**dadurch gekennzeichnet,**
**dass** an eine erste Axialseite (A₁) zumindest eines der Muffenrohrabschnitte (3), bevorzugt der Mehrzahl der Muffenrohrabschnitte (3), besonders bevorzugt sämtlicher Muffenrohrabschnitte (3) ein anderer der Muffenrohrabschnitte (3) oder einer der Glattrohr-Einführabschnitte (4) oder einer der Wellrohrabschnitte (2) jeweils entweder unmittelbar oder mittelbar über einen, insbesondere konischen Übergangsabschnitt, angrenzt, an den dann unmittelbar der andere Muffenrohrabschnitt (3), der Glattrohr-Einführabschnitte (4) oder der Wellrohrabschnitt (2) angrenzt.

3. Einstückiges Abgasrohr nach Anspruch 2,
**dadurch gekennzeichnet,**
**dass** an eine von der ersten Axialseite (A₁) abgewandten zweiten Axialseite (A₂) zumindest eines der Muffenrohrabschnitte (3), bevorzugt der Mehrzahl der Muffenrohrabschnitte (3), besonders bevorzugt sämtlicher Muffenrohrabschnitte (3) ein anderer der Muffenrohrabschnitte (3) oder einer der Glattrohr-Einführabschnitte (4) oder einer der Wellrohrabschnitte (2) jeweils entweder unmittelbar oder mittelbar über einen, insbesondere konischen Übergangsabschnitt, angrenzt, an den dann unmittelbar der andere Muffenrohrabschnitt (3), der Glattrohr-Einführabschnitt (4) oder der Wellrohrabschnitt (2) angrenzt.

4. Einstückiges Abgasrohr nach einem der vorhergehenden Ansprüche,
**dadurch gekennzeichnet,**
**dass** das Abgasrohr (1) mehrfach, insbesondere unmittelbar hintereinander, eine einzige oder mehre unterschiedliche Abgasrohrabschnittsfolgen (A_{F}), insbesondere umfassend mindestens einen zwischen zwei Abgasrohrabschitten angeordneten Muffenrohrabschnitt (3), mindestens einen Glattrohr-Einführabschnitt (4) und mindestens einen biegbaren Wellrohrabschnitt (2), aufweist, bevorzugt ausgewählt aus der Gruppe von Abgasrohrabschnittsfolgen (A_{F}) a bis n:
a. Glattrohr-Einführabschnitt (4), biegbarer Wellrohrabschnitt (2), Muffenrohrabschnitt (3), Muffenrohrabschnitt (3), biegbarer Wellrohrabschnitt (2)
b. Glattrohr-Einführabschnitt (4), biegbarer Wellrohrabschnitt (2), Muffenrohrabschnitt (3), Muffenrohrabschnitt (3), biegbarer Wellrohrabschnitt (2), Glattrohr-Einführabschnitt (4)
c. Muffenrohrabschnitt (3), biegbarer Wellrohrabschnitt (2), Glattrohr-Einführabschnitt (4)
d. Glattrohr-Einführabschnitt, biegbarer Wellrohrabschnitt, Muffenrohrabschnitt, biegbarer Wellrohrabschnitt
e. Glattrohr-Einführabschnitt (4), biegbarer Wellrohrabschnitt (2), Muffenrohrabschnitt (3), biegbarer Wellrohrabschnitt (2), Glattrohr-Einführabschnitt (4)
f. Muffenrohrabschnitt (3), biegbarer Wellrohrabschnitt (2), Glattrohr-Einführabschnitt (4), Glattrohr-Einführabschnitt (4)
g. Muffenrohrabschnitt (3), biegbarer Wellrohrabschnitt (2), Glattrohr-Einführabschnitt (4), Glattrohr-Einführabschnitt (4), biegbarer Wellrohrabschnitt (2)
h. Muffenrohrabschnitt (3), biegbarer Wellrohrabschnitt (2), Glattrohr-Einführabschnitt (4), biegbarer Wellrohrabschnitt (2),
i. Muffenrohrabschnitt (3), biegbarer Wellrohrabschnitt (2), Glattrohr-Einführabschnitt (4), biegbarer Wellrohrabschnitt (2), Glattrohr-Einführabschnitt (4),
j. biegbarer Wellrohrabschnitt (2), Muffenrohrabschnitt (3), Glattrohr-Einführabschnitt (4)
k. biegbarer Wellrohrabschnitt (2), Muffenrohrabschnitt (3), Glattrohr-Einführabschnitt (4), Glattrohr-Einführabschnitt (4)
l. biegbarer Wellrohrabschnitt (2), Muffenrohrabschnitt (3), Glattrohr-Einführabschnitt (4), biegbarer Wellrohrabschnitt (2), Glattrohr-Einführabschnitt (4)
m. biegbarer Wellrohrabschnitt (2), Glattrohr-Einführabschnitt (4), Muffenrohrabschnitt (3), Muffenrohrabschnitt (3)
n. Glattrohr-Einführabschnitt (4), biegbarer Wellrohrabschnitt (2), Muffenrohrabschnitt (3), Muffenrohrabschnitt (3).

5. Einstückiges Abgasrohr nach Anspruch 4,
**dadurch gekennzeichnet,**
**dass** zwischen mindestens zwei der aufeinanderfolgenden Abgasrohrabschnitte zumindest einer der Abgasrohrabschnittsfolgen (A_{F}) ein, insbesondere konischer, Übergangsabschnitt angeordnet ist.

6. Einstückiges Abgasrohr nach einem der vorhergehenden Ansprüche,
**dadurch gekennzeichnet,**
**dass** mindestens zwei der Muffenrohrabschnitte (3) unmittelbar aneinander grenzen, derart, dass bei einem Trennen des Abgasrohres (1) senkrecht zur Abgasrohrlängserstreckung in einem Bereich zwischen den Muffenrohrabschnitten (3) zwei endseitige Muffenrohrabschnitte (3) mit jeweils einer Muffenrohreinführöffnung resultieren.

7. Einstückiges Abgasrohr nach einem der Ansprüche 1 bis 5,
**dadurch gekennzeichnet,**
**dass** zwei unmittelbar benachbarte oder alternativ aufeinander folgende und über mindestens einen der Glattrohr-Einführabschnitte (4) und/oder mindestens einen der biegbaren Wellrohrabschnitte (2) voneinander beabstandete der Muffenrohrabschnitte (3) in die gleiche Axialrichtung orientiert oder gegensätzlich orientiert sind.

8. Einstückiges Abgasrohr nach einem der vorhergehenden Ansprüche,
**dadurch gekennzeichnet,**
**dass** an der Mehrzahl der Glattrohr-Einführabschnitte (4), insbesondere an jedem der Glattrohr-Einführabschnitte (4) einteilig mit dem Abgasrohr (1) ausgebildete Bajonettverschlussmittel (8) angeordnet sind, die derart ausgebildet sind, dass an diesen ein, bevorzugt hülsenförmiges Sicherungselement durch eine Relativverdrehbewegung zum Abgasrohr (1) zum Herstellen eines in axialer Richtung wirksamen Formschlusses festlegbar ist.

9. Einstückiges Abgasrohr nach einem der vorhergehenden Ansprüche,
**dadurch gekennzeichnet,**
**dass** die Wellrohrabschnitte (2) zumindest abschnittsweise als Außengewindeabschnitte ausgebildet sind und/oder dass die Wellrohrabschnitte (2) jeweils mehrere ringförmige und in axial benachbarten, parallelen Radialebenen bezogen auf die axiale Abgasrohrlängserstreckung angeordnete Wellen aufweist.

10. Einstückiges Abgasrohr nach Anspruch 5 sowie 6 bis 9 wenn rückbezogen auf Anspruch 5,
**dadurch gekennzeichnet,**
**dass** zwischen zwei unmittelbar aneinander angrenzenden der Muffenrohrabschnitte (3) und/oder zwischen zwei unmittelbar aneinander angrenzenden der Glattrohr-Einführabschnitte (4) und/oder zwischen einem der Muffenrohrabschnitte (3) und einem unmittelbar daran angrenzenden der Glattrohr-Einführabschnitte (4) und/oder zu beiden Axialseiten zumindest eines der Übergangsabschnitte (18), bevorzugt sämtlicher Übergangsabschnitte (18) eine, insbesondere als Ringvertiefung ausgebildete Trennmarkierung angeordnet ist

11. Einstückiges Abgasrohr nach einem der vorhergehenden Ansprüche,
**dadurch gekennzeichnet,**
**dass** zumindest einer der Muffenrohrabschnitte (3), bevorzugt die Mehrzahl der Muffenrohrabschnitte (3), bevorzugt sämtliche Muffenrohrabschnitte (3), auf einer von der jeweiligen, durch Abtrennen erzeugbaren Muffenrohröffnung abgewandten Seite der Ringnut (5) und/oder des Ringwulstes (6) einen Starrohrabschnitt aufweisen, der so bemessen ist, dass die Axialerstreckung des Muffenrohres inklusive des Starrohrabschnittes gleich ist wie oder größer ist als die axiale Länge der Glattrohr-Einführabschnitte (4).

12. Einstückiges Abgasrohr nach einem der Ansprüche 1 bis 10,
**dadurch gekennzeichnet,**
**dass** die axiale Länge zumindest eines der Muffenrohrabschnitte (3), bevorzugt der Mehrzahl der Muffenrohrabschnitte (3), besonders bevorzugt sämtlicher Muffenrohrabschnitte (3) kürzer bemessen ist, bevorzugt um mindestens 30% kürzer bemessen ist, als die axiale Länge der Glattrohr-Einführabschnitte (4), um ein Abgasrohr oder einen davon abgetrennten Abgasrohrabschnitt mit einem entdseitigen Glattrohr-Einführabschnitt (4) axial über die Ringnut (5) hinaus bis in den angrenzenden Wellrohrabschnitt (2) einstecken zu können.

13. Einstückiges Abgasrohr nach einem der vorhergehenden Ansprüche,
**dadurch gekennzeichnet,**
**dass** zumindest einer der an einen der Muffenrohrabschnitte (3) angrenzenden der Wellrohrabschnitte (2), zumindest in einem an den Muffenrohrabschnitt (3) angrenzenden Axialabschnitt (20, 21), dessen axiale Länge bevorzugt mindestens 30% der axialen Länge der Glattrohr-Einführabschnitte (4) entspricht, einen freien Innendurchmesser aufweist, der dem Außendurchmesser der Glattrohr-Einführabschnitte (4) zuzüglich eines Spiels entspricht, um ein Abgasrohr (1) oder einen davon abgetrennten Abgasrohrabschnitt mit einem endseitigen Glattrohr-Einführabschnitt (4) axial über die Ringnut (5) hinaus bis in den angrenzenden Wellrohrabschnitt (2) einstecken zu können, bevorzugt axial bis über mindestens drei axial benachbarte Wellentäler des angrenzenden Wellrohrabschnittes (2) hinaus.

14. Einstückiges Abgasrohr nach einem der vorhergehenden Ansprüche,
**dadurch gekennzeichnet,**
**dass** sämtliche der Wellrohrabschnitte (2) den gleichen freien Innendurchmesser aufweisen, wobei bevorzugt der freie Innendurchmesser dem Außendurchmesser der Glattrohr-Einführabschnitte (4) zuzüglich eines Spiels entspricht oder kleiner ist als der Außendurchmesser der Glattrohr-Einführabschnitte (4) und weiter bevorzugt dem Innendurchmesser der Glattrohr-Einführabschnitte (4) entspricht.

15. Einstückiges Abgasrohr nach einem der Ansprüche 1 bis 14,
**dadurch gekennzeichnet,**
**dass** mindestens zwei Arten von Wellrohrabschnitten (2) vorgesehen sind, die einen voneinander unterschiedlichen freien Innendurchmesser aufweisen, wobei bevorzugt eine Art der Wellrohrabschnitte (2) zumindest abschnittsweise einen freien Innendurchmesser aufweist der dem Außendurchmesser der Glattrohr-Einführabschnitte (4) zuzüglich eines Spiels entspricht und die andere Art von Wellrohrabschnitten (2) einen geringeren freien Innenddurchmesser aufweist, der bevorzugt dem Innendurchmesser der Glattrohr-Einführabschnitte (4) entspricht und/oder dass zumindest einer der Wellrohrabschnitte (2), bevorzugt mehrere der Wellrohrabschnitte (2), zwei, bevorzugt axial benachbarte, freie Innendurchmesserabschnitte aufweisen, von denen einer einen freien Innendurchmesser aufweist, der dem Außendurchmesser der Glattrohr-Einführabschnitte (4) zuzüglich eines Spiels entspricht und der andere Innendurchmesser einen geringeren freien Innendurchmesser aufweist, der bevorzugt dem Innendurchmesser der Glattrohr-Einführabschnitte (4) entspricht.

16. Abgasrohrabschnitt, hergestellt durch Ablängen von einem einstückigen Abgasrohr (1) nach einem der vorhergehenden Ansprüche, mit einem endseitigen Muffenrohrabschnitt (3), mindestens einem Wellrohrabschnitt (2) und mindestens einem Glattrohr-Einführabschnitt (4) und bevorzugt weiteren Muffenrohrabschnittes (3),
**dadurch gekennzeichnet,**
**dass** die Muffenrohröffnung des endseitigen Muffenrohrabschnittes (3) eine Trennkante aufweist.

17. System umfassend eine Heizung, insbesondere eine Gebäudeheizung, und ein abgasleitend damit verbundenes einstückiges Abgasrohr (1) nach einem der Ansprüche 1 bis 15 oder einen daraus durch Trennen des einstückiges Abgasrohres (1) hergestellten Abgasrohrabschnitt gemäß Anspruch 16 und bevorzugt ein Sicherungselement mit sicherungselementseitigen Bajonettverschlussmitteln (12) zum Zusammenwirken mit fakultativen Bajonettverschlussmitteln eines Glattrohr-Einführabschnittes (4) des einstückiges Abgasrohres oder des Abgasrohrabschnittes.

18. Verfahren zum Herstellen eines Abgasrohrabschnittes aus einem einstückigen Abgasrohr (1) nach einem der Ansprüche 1 bis 12 durch Ablängen des Abgasrohres (1),
**dadurch gekennzeichnet,**
**dass** das Abgasrohr (1) benachbart zu einem der beidseitig zwischen zwei Abgasrohrabschnitten angeordneten Muffenrohrabschnitte (3) senkrecht zur Abgasrohrlängserstreckung durchtrennt wird und dadurch dieser Muffenrohrabschnitt (3) zu einem endseitigen Muffenrohrabschnitt (3) wird, in dessen durch das Trennen entstandene Muffenrohreinführöffnung ein Rohr, insbesondere ein Glattrohr-Einführabschnitt (4) eines anderen Abgasrohres (1) oder Abgasrohrabschnittes einführbar ist, und/oder
**dass** das Abgasrohr (1) an einer Axialposition oder an zwei axial beabstandeten Axialpositionen derart getrennt wird, dass ein (abgetrennter) Abgasrohrabschnitt mit endseitig zwei Glattrohr-Einführ-abschnitten (4), bevorzugt jeweils aufweisend angeformte Bajonettverschlussmittel (8), und bevorzugt mindestens einem dazwischen angeordneten biegbaren Wellrohrabschnitt (2) und/oder einem Muffenrohrabschnitt (3) und/oder einem Glattrohr-Einführabschnitt (4), resultiert.

## Claims

1. Integral exhaust gas pipe of plastic material for conducting exhaust gas of heating plants, with a multitude of flexible, corrugated pipe sections (2) arranged along a longitudinal extent of an exhaust gas pipe, and rigid, cylindric plain pipe insertion sections (4), wherein at least two of the corrugated pipe sections (2) incorporate at least one of the plain pipe insertion sections (4) therebetween and/or at least two of the plain pipe insertion sections (4) incorporate at least one of the corrugated pipe sections (2) therebetween,
**characterized in that**
the exhaust gas pipe (1) comprises a multitude of socket pipe sections (3) arranged distributed over the longitudinal extent of an exhaust gas pipe which each comprise an inner annular groove (5) for receiving an annular sealing and which adjoin an exhaust gas pipe section of the exhaust gas pipe (1) on both sides, and **in that** through separating one of these exhaust gas pipe sections perpendicular to the longitudinal extent of an exhaust gas pipe a socket pipe insertion opening can be generated, of which the inner diameter corresponds to an outer diameter of the plain pipe insertion sections (4) plus a clearance so that an exhaust gas pipe (1) or an exhaust gas pipe section separated therefrom can axially be slotted in the socket pipe insertion opening until beyond the annular groove (5) of the associated socket pipe section (3) with an end-side plain pipe insertion section (4).

2. Integral exhaust gas pipe according to claim 1,
**characterized in that**
to a first axial side (A₁) of at least one of the socket pipe sections (3), preferably of the multitude of the socket pipe sections (3), particularly preferably of all socket pipe sections (3), another of the socket pipe sections (3) or one of the plain pipe insertion sections (4) or one of the corrugated pipe sections (2) in each case adjoins directly or indirectly via a, in particular conical transition section to which then directly adjoins the other socket pipe section (3), the plain pipe insertion sections (4) or the corrugated pipe section (2).

3. Integral exhaust gas pipe according to claim 2,
**characterized in that**
to a second axial side (A₂) facing away from the first axial side (A₁) of at least one of the socket pipe sections (3), preferably of the multitude of the socket pipe sections (3), particularly preferably of all socket pipe sections (3) another of the socket pipe sections (3) or one of the plain pipe insertion sections (4) or one of the corrugated pipe sections (2) in each case adjoins directly or indirectly via a, in particular conical transition section to which then directly adjoins the other socket pipe section (3), the plain pipe insertion section (4) or the corrugated pipe section (2).

4. Integral exhaust gas pipe according to one of the preceding claims,
**characterized in that**
the exhaust gas pipe (1) repeatedly comprises, in particular in direct succession, one single or multiple different exhaust gas pipe section sequences (A_{F}), in particular including a socket pipe section (3) arranged between two exhaust gas pipe sections, at least one plain pipe insertion section (4) and at least one flexible corrugated pipe section (2), preferably selected from the group of exhaust gas pipe section sequences (A_{F}) a to n:
a. plain pipe insertion section (4), flexible corrugated pipe section (2), socket pipe section (3), socket pipe section (3), flexible corrugated pipe section (2)
b. plain pipe insertion section (4), flexible corrugated pipe section (2), socket pipe section (3), socket pipe section (3), flexible corrugated pipe section (2), plain pipe insertion section (4)
c. socket pipe section (3), flexible corrugated pipe section (2), plain pipe insertion section (4)
d. plain pipe insertion section, flexible corrugated pipe section, socket pipe section, flexible corrugated pipe section
e. plain pipe insertion section (4), flexible corrugated pipe section (2), socket pipe section (3), flexible corrugated pipe section (2), plain pipe insertion section (4)
f. socket pipe section (3), flexible corrugated pipe section (2), plain pipe insertion section (4), plain pipe insertion section (4)
g. socket pipe section (3), flexible corrugated pipe section (2), plain pipe insertion section (4), plain pipe insertion section (4), flexible corrugated pipe section (2)
h. socket pipe section (3), flexible corrugated pipe section (2), plain pipe insertion section (4), flexible corrugated pipe section (2),
i. socket pipe section (3), flexible corrugated pipe section (2), plain pipe insertion section (4), flexible corrugated pipe section (2), plain pipe insertion section (4)
j. flexible corrugated pipe section (2), socket pipe section (3), plain pipe insertion section (4)
k. flexible corrugated pipe section (2), socket pipe section (3), plain pipe insertion section (4), plain pipe insertion section (4)
l. flexible corrugated pipe section (2), socket pipe section (3), plain pipe insertion section (4), flexible corrugated pipe section (2), plain pipe insertion section (4)
m. flexible corrugated pipe section (2), plain pipe insertion section (4), socket pipe section (3), socket pipe section (3)
n. plain pipe insertion section (4), flexible corrugated pipe section (2), socket pipe section (3), socket pipe section (3).

5. Integral exhaust gas pipe according to claim 4,
**characterized in that**
a, in particular conical, transition section is arranged between at least two of the succeeding exhaust gas pipe sections of at least one of the exhaust gas pipe section sequences (A_{F}).

6. Integral exhaust gas pipe according to one of the preceding claims,
**characterized in that**
at least two of the socket pipe sections (3) directly adjoin one another in such a way that upon a separation of the exhaust gas pipe (1) perpendicular to the longitudinal extent of an exhaust gas pipe, two end-side socket pipe sections (3) each having a socket pipe insertion opening result in a region between the socket pipe sections (3).

7. Integral exhaust gas pipe according to one of claims 1 to 5,
**characterized in that**
two of the socket pipe sections (3) directly neighboring or alternatively succeeding one another and spaced from one another via at least one of the plain pipe insertion sections (4) and/or at least one of the flexible corrugated pipe sections (2) are oriented in the same axial direction or are oriented opposed to one another.

8. Integral exhaust gas pipe according to one of the preceding claims,
**characterized in that**
on the multitude of the plain pipe insertion sections (4), in particular on each of the plain pipe insertion sections (4), bayonet locking means (8) configured integral with the exhaust gas pipe (1) are arranged which are configured in such a way that a, in particular sleeve-shaped securing element is attachable thereon by a turning movement relative to the exhaust gas pipe (1) for establishing a positive connection effective in axial direction.

9. Integral exhaust gas pipe according to one of the preceding claims,
**characterized in that**
the corrugated pipe sections (2) are configured as male thread sections at least in sections and/or **in that** the corrugated pipe sections (2) in each case comprise multiple annular corrugations arranged in axially neighboring parallel radial planes with respect to the axial longitudinal extent of an exhaust gas pipe.

10. Integral exhaust gas pipe according to claim 5 as well as 6 to 9 when referring back to claim 5,
**characterized in that**
a separation marking, in particular configured as annular indentation is arranged between two of the socket pipe sections (3) directly adjoining one another and/or between two of the plain pipe insertion sections (4) directly adjoining one another and/or between one of the socket pipe sections (3) and one of the plain pipe insertion sections (4) directly adjoining thereon and/or to both axial sides of at least one of the transition sections (18), preferably all of the transition sections (18).

11. Integral exhaust gas pipe according to one of the preceding claims,
**characterized in that**
at least one of the socket pipe sections (3), preferably the multitude of the socket pipe sections (3), preferably all the socket pipe sections (3) comprise a rigid pipe section on a side of the annular groove (5) and/or of the annular bulge (6) facing away from the respective socket pipe opening generatable through separation which section is dimensioned so that the axial extent of the socket pipe inclusive of the rigid pipe section is the same as or is greater than the axial length of the plain pipe insertion sections (4).

12. Integral exhaust gas pipe according to one of claims 1 to 10,
**characterized in that**
the axial length of at least one of the socket pipe sections (3), preferably the multitude of the socket pipe sections (3), particularly preferably all of the socket pipe sections (3) is shorter, preferably shorter by at least 30%, than the axial length of the plain pipe insertion sections (4) to be able to slot in an exhaust gas pipe or an exhaust gas pipe section separated therefrom with an end-side plain pipe insertion section (4) axially beyond the annular groove (5) into the adjoining corrugated pipe section (2).

13. Integral exhaust gas pipe according to one of the preceding claims,
**characterized in that**
at least one of the corrugated pipe sections (2) adjoining one of the socket pipe sections (3) comprises, at least in an axial section (20, 21) adjoining the socket pipe section (3), of which the axial length corresponds to at least 30% of the axial length of the plain pipe insertion sections (4), a free inner diameter which corresponds to the outer diameter of the plain pipe insertion sections (4) plus a clearance to be able to slot in an exhaust gas pipe (1) or an exhaust gas pipe section separated therefrom with an end-side plain pipe insertion section (4) axially beyond the annular groove (5) into the adjoining corrugated pipe section (2), preferably beyond at least three axially neighboring corrugation valleys of the adjoining corrugated pipe section (2).

14. Integral exhaust gas pipe according to one of the preceding claims,
**characterized in that**
all of the corrugated pipe sections (2) comprise the same free inner diameter, wherein preferably the free inner diameter corresponds to the outer diameter of the plain pipe insertion sections (4) plus a clearance or is smaller than the outer diameter of the plain pipe insertion section (4) and further preferably corresponds to the inner diameter of the plain pipe insertion sections (4).

15. Integral exhaust gas pipe according to one of claims 1 to 14,
**characterized in that**
at least two types of corrugated pipe sections (2) are provided which has an inner diameter different from one another, wherein preferably one type of the corrugated pipe sections (2) comprises a free inner diameter at least in sections which corresponds to the outer diameter of the plain pipe insertion sections (4) plus a clearance and the other type of corrugated pipe sections (2) has a smaller free inner diameter which preferably corresponds to the inner diameter of the plain pipe insertion sections (4) and/or **in that** at least one of the corrugated pipe sections (2), preferably multiple of the corrugated pipe sections (2) comprise two, preferably axially neighboring, free inner diameter sections one of which comprises a free inner diameter which corresponds to the outer diameter of the plain pipe insertion sections (4) plus a clearance and the other inner diameter has a smaller free inner diameter which preferably corresponds to the inner diameter of the plain pipe insertion sections (4).

16. Exhaust gas pipe section, produced by cutting from an integral exhaust gas pipe (1) according to one of the preceding claims, with an end-side socket pipe section (3), at least one corrugated pipe section (2) and at least one plain pipe insertion sections (4) and preferably further socket pipe sections (3),
**characterized in that**
the socket pipe opening of the end-side socket pipe section (3) comprises a separating edge.

17. System including a heating, in particular a heating for buildings, and an integral exhaust gas pipe (1) according to one of claims 1 to 15 connected therewith in an exhaust gas conducting manner or an exhaust gas pipe section produced through separation of the integral exhaust gas pipe (1) according to claim 16 and preferably a securing element with bayonet locking means (12) on the side of the securing element for cooperating with optional bayonet locking means of a plain pipe insertion section (4) of the integral exhaust gas pipe or the exhaust gas pipe section.

18. Method for producing an exhaust gas pipe section from an integral exhaust gas pipe (1) according to one of claims 1 to 12 through cutting the exhaust gas pipe (1),
**characterized in that**
the exhaust gas pipe (1) is cut perpendicular to the longitudinal extent of an exhaust gas pipe and adjacent to one of the socket pipe sections (3) arranged on both sides between two exhaust gas pipes and thereby this socket pipe section (3) becomes an end-side socket pipe section (3) in the socket pipe opening of which a pipe, in particular a plain pipe insertion section (4) of another exhaust gas pipe (1) or exhaust gas pipe section is insertable,
and/or
**in that** the exhaust gas pipe (1) is cut at an axial position or at two axially spaced axial positions in such a way that a (separated) exhaust gas pipe section with two plain pipe insertion sections (4) on the end-side, preferably in each case comprising molded bayonet locking means (8), and preferably at least one flexible corrugated pipe section (2) arranged therebetween and/or a socket pipe section (3) and/or a plain pipe insertion section (4), results.

## Revendications

1. Tuyau d'échappement d'une seule pièce en plastique pour le guidage des gaz d'échappement d'installations de chauffage, comprenant une pluralité de sections de tuyau ondulées flexibles disposées le long d'une étendue longitudinale du tuyau d'échappement et de sections d'introduction de tuyau lisses cylindriques rigides (4), au moins deux des sections de tuyau ondulées (2) recevant entre elles au moins l'une des sections d'introduction de tuyau lisses (4) et/ou au moins deux des sections d'introduction de tuyau lisses (4) recevant entre elles au moins l'une des sections de tuyau ondulées (2),
**caractérisé en ce que**
le tuyau d'échappement (1) présente une pluralité de sections de silencieux (3) réparties sur l'étendue longitudinale du tuyau d'échappement qui présentent chacune une rainure annulaire intérieure (5) pour recevoir un joint d'étanchéité annulaire et qui sont adjacentes des deux côtés à une section de tuyau d'échappement du tuyau d'échappement (1), et **en ce qu'**une ouverture d'introduction de silencieux peut être réalisée en coupant l'une de ses sections de tuyau d'échappement perpendiculairement à l'étendue longitudinale du tuyau d'échappement, le diamètre intérieur de l'ouverture d'introduction de silencieux correspondant à un diamètre extérieur des sections d'introduction de tuyau lisses (4) plus un jeu, de sorte que dans l'ouverture d'introduction de silencieux puisse être enfoncé axialement un tuyau d'échappement (1) ou une section de tuyau d'échappement séparée de celui-ci avec une section d'introduction de tuyau lisse (4) du côté de l'extrémité, jusqu'au-delà de la rainure annulaire (5) de la section de silencieux associée (3).

2. Tuyau d'échappement d'une seule pièce selon la revendication 1,
**caractérisé en ce**
**qu'**à un premier côté axial (A₁) d'au moins l'une des sections de silencieux (3), de préférence de la pluralité des sections de silencieux (3), particulièrement préférablement de toutes les sections de silencieux (3), est adjacente une autre des sections de silencieux (3) ou l'une des sections d'introduction de tuyau lisses (4) ou l'une des sections de tuyau ondulées (2) à chaque fois directement ou indirectement par le biais d'une section de transition, notamment conique, à laquelle est alors directement adjacente l'autre section de silencieux (3), la section d'introduction de tuyau lisse (4) ou la section de tuyau ondulée (2).

3. Tuyau d'échappement d'une seule pièce selon la revendication 2,
**caractérisé en ce**
**qu'**à un deuxième côté axial (A₂) opposé au premier côté axial (A₁) d'au moins l'une des sections de silencieux (3), de préférence de la pluralité des sections de silencieux (3), particulièrement préférablement de toutes les sections de silencieux (3), est adjacente une autre des sections de silencieux (3) ou l'une des sections d'introduction de tuyau lisses (4) ou l'une des sections de tuyau ondulées (2) à chaque fois directement ou indirectement par le biais d'une section de transition, notamment conique, à laquelle est alors directement adjacente l'autre section de silencieux (3), la section d'introduction de tuyau lisse (4) ou la section de tuyau ondulée (2).

4. Tuyau d'échappement d'une seule pièce selon l'une quelconque des revendications précédentes,
**caractérisé en ce que**
le tuyau d'échappement (1) présente, plusieurs fois, en particulier directement les unes derrière les autres, une succession unique, ou plusieurs successions différentes, de sections de tuyau d'échappement (A_{F}), en particulier comprenant au moins une section de silencieux (3) disposée entre deux sections de tuyau d'échappement, en au moins une section d'introduction de tuyau lisse (4) et au moins une section de tuyau ondulée flexible (2), de préférence choisies parmi le groupe de successions de sections de tuyau d'échappement (A_{F}) a à n :
a. section d'introduction de tuyau lisse (4), section de tuyau ondulée flexible (2), section de silencieux (3), section de silencieux (3), section de tuyau ondulée flexible (2)
b. section d'introduction de tuyau lisse (4), section de tuyau ondulée flexible (2), section de silencieux (3), section de silencieux (3), section de tuyau ondulée flexible (2), section d'introduction de tuyau lisse (4)
c. section de silencieux (3), section de tuyau ondulée flexible (2), section d'introduction de tuyau lisse (4)
d. section d'introduction de tuyau lisse, section de tuyau ondulée flexible, section de silencieux, section de tuyau ondulée flexible,
e. section d'introduction de tuyau lisse (4), section de tuyau ondulée flexible (2), section de silencieux (3), section de tuyau ondulée flexible (2), section d'introduction de tuyau lisse (4)
f. section de silencieux (3), section de tuyau ondulée flexible (2), section d'introduction de tuyau lisse (4), section d'introduction de tuyau lisse (4)
g. section de silencieux (3), section de tuyau ondulée flexible (2), section d'introduction de tuyau lisse (4), section d'introduction de tuyau lisse (4), section de tuyau ondulée flexible (2)
h. section de silencieux (3), section de tuyau ondulée flexible (2), section d'introduction de tuyau lisse (4), section de tuyau ondulée flexible (2)
i. Section de silencieux (3), section de tuyau ondulée flexible (2), section d'introduction de tuyau lisse (4), section de tuyau ondulée flexible (2), section d'introduction de tuyau lisse (4)
j. section de tuyau ondulée flexible (2), section de silencieux (3), section d'introduction de tuyau lisse (4)
k. section de tuyau ondulée flexible (2), section de silencieux (3), section d'introduction de tuyau lisse (4), section d'introduction de tuyau lisse (4)
l. section de tuyau ondulée flexible (2), section de silencieux (3), section d'introduction de tuyau lisse (4), section de tuyau ondulée flexible (2), section d'introduction de tuyau lisse (4)
m. section de tuyau ondulée flexible (2), section d'introduction de tuyau lisse (4), section de silencieux (3), section de silencieux (3)
n. section d'introduction de tuyau lisse (4), section de tuyau ondulée flexible (2), section de silencieux (3), section de silencieux (3).

5. Tuyau d'échappement d'une seule pièce selon la revendication 4,
**caractérisé en ce**
**qu'**entre au moins deux des sections de tuyau d'échappement successives d'au moins l'une des successions de sections de tuyau d'échappement (A_{F}) est disposée une section de transition, notamment conique.

6. Tuyau d'échappement d'une seule pièce selon l'une quelconque des revendications précédentes,
**caractérisé en ce**
**qu'**au moins deux des sections de silencieux (3) sont directement adjacentes l'une à l'autre, de telle sorte que lors d'un découpage du tuyau d'échappement (1) perpendiculairement à l'étendue longitudinale du tuyau d'échappement dans une région entre les sections de silencieux (3), deux sections de silencieux (3) du côté de l'extrémité soient obtenues avec à chaque fois une ouverture d'introduction de silencieux.

7. Tuyau d'échappement d'une seule pièce selon l'une quelconque des revendications 1 à 5,
**caractérisé en ce que**
deux des sections de silencieux (3) immédiatement adjacentes ou, en variante, se suivant mutuellement et séparées l'une de l'autre par au moins l'une des sections d'introduction de tuyau lisses (4) et/ou au moins l'une des sections de tuyau ondulées flexibles (2) sont orientées dans la même direction axiale ou sont orientées en sens opposé.

8. Tuyau d'échappement d'une seule pièce selon l'une quelconque des revendications précédentes,
**caractérisé en ce**
**qu'**au niveau de la pluralité des sections d'introduction de tuyau lisses (4), en particulier au niveau de chacune des sections d'introduction de tuyau lisses (4), sont disposés des moyens de fermeture à baïonnette (8) réalisés d'une seule pièce avec le tuyau d'échappement (1), qui sont réalisés de telle sorte qu'un élément de fixation de préférence en forme de douille puisse être fixé à ceux-ci par un mouvement de rotation relative par rapport au tuyau d'échappement (1) pour établir un engagement par correspondance de formes actif dans la direction axiale.

9. Tuyau d'échappement d'une seule pièce selon l'une quelconque des revendications précédentes,
**caractérisé en ce que**
les sections de tuyau ondulées (2) sont réalisées au moins en partie sous forme de section filetée extérieure et/ou **en ce que** les sections de tuyau ondulées (2) présentent à chaque fois plusieurs ondulations annulaires et disposées dans des plans radiaux parallèles adjacents axialement par rapport à l'étendue longitudinale axiale du tuyau d'échappement.

10. Tuyau d'échappement d'une seule pièce selon la revendication 5 et 6 à 9 lorsqu'elles se rapportent à la revendication 5,
**caractérisé en ce**
**qu'**entre deux des sections de silencieux (3) immédiatement adjacentes l'une à l'autre et/ou entre deux des sections d'introduction de tuyau lisses (4) immédiatement adjacentes l'une à l'autre et/ou entre l'une des sections de silencieux (3) et l'une des sections d'introduction de tuyau lisses (4) immédiatement adjacente à celle-ci et/ou des deux côtés axiaux d'au moins l'une des sections de transition (18), de préférence de toutes les sections de transition (18), est disposé un marquage de séparation réalisé notamment sous forme de renfoncement annulaire.

11. Tuyau d'échappement d'une seule pièce selon l'une quelconque des revendications précédentes,
**caractérisé en ce**
**qu'**au moins l'une des sections de silencieux (3), de préférence la pluralité des sections de silencieux (3), de préférence toutes les sections de silencieux (3), présente une section de tuyau rigide sur un côté de la rainure annulaire (5) et/ou du bourrelet annulaire (6) opposé à l'ouverture de silencieux respective pouvant être obtenue par découpage, qui est dimensionnée de telle sorte que l'étendue axiale du silencieux y compris la section de tuyau rigide soit identique ou supérieure à la longueur axiale des sections d'introduction de tuyau lisses (4).

12. Tuyau d'échappement d'une seule pièce selon l'une quelconque des revendications 1 à 10,
**caractérisé en ce que**
la longueur axiale d'au moins l'une des sections de silencieux (3), de préférence de la pluralité des sections de silencieux (3), particulièrement préférablement de toutes les sections de silencieux (3) est dimensionnée de manière à être plus courte, de préférence d'au moins 30 % plus courte, que la longueur axiale des sections d'introduction de tuyau lisses (4), afin de pouvoir enfoncer un tuyau d'échappement ou une section de tuyau d'échappement séparée de celui-ci avec une section d'introduction de tuyau lisse (4) du côté de l'extrémité, axialement au-delà de la rainure annulaire (5) jusque dans la section de tuyau ondulée (2) adjacente.

13. Tuyau d'échappement d'une seule pièce selon l'une quelconque des revendications précédentes,
**caractérisé en ce**
**qu'**au moins l'une des sections de tuyau ondulées (2) adjacente à l'une des sections de silencieux (3), au moins dans une section axiale (20, 21) adjacente à la section de silencieux (3), dont la longueur axiale correspond de préférence à au moins 30 % de la longueur axiale des sections d'introduction de tuyau lisses (4), présente un diamètre intérieur libre qui correspond au diamètre extérieur des sections d'introduction de tuyau lisses (4) plus un jeu, afin de pouvoir enfoncer un tuyau d'échappement (1) ou une section de tuyau d'échappement séparée de celui-ci, avec une section d'introduction de tuyau lisse (4) du côté de l'extrémité, axialement au-delà de la rainure annulaire (5) jusque dans la section de tuyau ondulée (2) adjacente, de préférence axialement jusqu'au-delà d'au moins trois creux d'ondulations adjacents axialement de la section de tuyau ondulée (2) adjacente.

14. Tuyau d'échappement d'une seule pièce selon l'une quelconque des revendications précédentes,
**caractérisé en ce que**
toutes les sections de tuyau ondulées (2) présentent le même diamètre intérieur libre, de préférence le diamètre intérieur libre correspondant au diamètre extérieur des sections d'introduction de tuyau lisses (4) plus un jeu ou étant inférieur au diamètre extérieur des sections d'introduction de tuyau lisses (4) et plus préférablement correspondant au diamètre intérieur des sections d'introduction de tuyau lisses (4).

15. Tuyau d'échappement d'une seule pièce selon l'une quelconque des revendications 1 à 14,
**caractérisé en ce**
**qu'**au moins deux types de sections de tuyau ondulées (2) sont prévus, lesquels présentent un diamètre intérieur libre différent, de préférence un type des sections de tuyau ondulées (2) présentant au moins en partie un diamètre intérieur libre qui correspond au diamètre extérieur des sections d'introduction de tuyau lisses (4) plus un jeu, et l'autre type de sections de tuyau ondulées (2) présentant un diamètre intérieur libre plus petit, qui correspond de préférence au diamètre intérieur des sections d'introduction de tuyau lisses (4) et/ou en ce qu'au moins l'une des sections de tuyau ondulées (2), de préférence plusieurs des sections de tuyau ondulées (2), présentent deux sections de diamètre intérieur libres, de préférence adjacentes axialement, dont l'une présente un diamètre intérieur libre qui correspond au diamètre extérieur des sections d'introduction de tuyau lisses (4) plus un jeu et l'autre diamètre intérieur présente un diamètre intérieur libre plus petit qui correspond de préférence au diamètre intérieur des sections d'introduction de tuyau lisses (4).

16. Section de tuyau d'échappement, fabriquée par découpage à la longueur d'un tuyau d'échappement d'une seule pièce (1) selon l'une quelconque des revendications précédentes, comprenant une section de silencieux (3) du côté de l'extrémité, au moins une section de tuyau ondulée (2) et au moins une section d'introduction de tuyau lisse (4) et de préférence d'autres sections de silencieux (3),
**caractérisée en ce que**
l'ouverture de silencieux de la section de silencieux (3) du côté de l'extrémité présente une arête de séparation.

17. Système, comprenant un chauffage, en particulier un chauffage de bâtiment, et un tuyau d'échappement d'une seule pièce (1) connecté à celui-ci et guidant les gaz d'échappement, selon l'une quelconque des revendications 1 à 15, ou une section de tuyau d'échappement fabriquée à partir de celui-ci par séparation du tuyau d'échappement d'une seule pièce (1), selon la revendication 16, et de préférence un élément de fixation avec des moyens de fermeture à baïonnette (12) du côté de l'élément de fixation, destinés à coopérer avec des moyens de fermeture à baïonnette facultatifs d'une section d'introduction de tuyau lisse (4) du tuyau d'échappement d'une seule pièce ou de la section de tuyau d'échappement.

18. Procédé de fabrication d'une section de tuyau d'échappement à partir d'un tuyau d'échappement d'une seule pièce (1) selon l'une quelconque des revendications 1 à 12 par découpage à la longueur du tuyau d'échappement (1),
**caractérisé en ce que**
le tuyau d'échappement (1) est découpé perpendiculairement à l'étendue longitudinale du tuyau d'échappement en position adjacente à l'une des sections de silencieux (3) disposées des deux côtés entre deux sections de tuyau d'échappement, et cette section de silencieux (3) devenant ainsi une section de silencieux (3) du côté de l'extrémité, dans laquelle peut être enfoncé, à travers l'ouverture d'introduction de silencieux produite par la séparation, un tuyau, en particulier une section d'introduction de tuyau lisse (4) d'un autre tuyau d'échappement (1) ou d'une autre portion de tuyau d'échappement,
et/ou
**en ce que** le tuyau d'échappement (1) est découpé au niveau d'une position axiale ou au niveau de deux positions axiales espacées axialement, de telle sorte qu'il en résulte une section de tuyau d'échappement (découpée) avec deux sections d'introduction de tuyau lisses (4) du côté des extrémités, de préférence présentant à chaque fois des moyens de fermeture à baïonnette (8) façonnés, et de préférence au moins une section de tuyau ondulée flexible (2) disposée entre elles et/ou une section de silencieux (3) et/ou une section d'introduction de tuyau lisse (4).
